# EUROPÄISCHE PATENTSCHRIFT

(11) **EP 3 759 005 B1**
(45) Veröffentlichungstag und Bekanntmachung des Hinweises auf die Patenterteilung: **11.05.2022**
(21) Anmeldenummer: 19716060.9
(22) Anmeldetag: 22.02.2019
(51) Int. Cl.: B62B 5/00, B62B 3/14

(54) **TRANSPORTEINRICHTUNG MIT WENIGSTENS EINEM TRANSPORTGERÄT SOWIE VERFAHREN ZUR HERSTELLUNG, ZUM BETRIEB, UND ZUR WARTUNG DER TRANSPORTEINRICHTUNG**
TRANSPORT SYSTEM WITH AT LEAST ONE TRANSPORT DEVICE, AND METHOD FOR MANUFACTURING, OPERATING, AND MAINTAINING THE TRANSPORT SYSTEM
SYSTÈME DE TRANSPORT AVEC AU MOINS UN CHARIÔT DE TRANSPORT, MÉTHODES ASSOCIÉE DE MONTAGE, USAGE ET MAINTENANCE

(30) Priorität: 02.03.2018 DE 202018001120 U; 10.03.2018 DE 202018001297 U; 29.03.2018 DE 102018002625; 05.05.2018 DE 102018003664; 29.05.2018 DE 102018004282
(43) Veröffentlichungstag der Anmeldung: 06.01.2021
(73) Patentinhaber: Eberlein, Martin, 1000 Sofia (BG)
(72) Erfinder: Eberlein, Martin, 1000 Sofia (BG)
(86) Internationale Anmeldenummer: PCT/DE2019/000045
(87) Internationale Veröffentlichungsnummer: WO 2019/166038

(56) Entgegenhaltungen:
- WO-A1-2011/088568
- WO-A1-2016/135142
- US-A1- 2015 271 483

## Beschreibung

Die Erfindung betrifft eine Transporteinrichtung gemäß Anspruch 1, mit wenigstens einem, durch ein Erkennungsmittel individualisiertem Transportgerät, das wenigstens eine Warenablageeinrichtung und wenigstens einen Griff aufweist und das mit jeweils gleichen Transportgeräten stapelbar ist, wobei die Transporteinrichtung wenigstens zwei, an einem gleichen und/oder an verschiedenen Transportgeräten angeordnete, stromversorgte elektronische Einrichtungen aufweist, von denen wenigstens eine die Funktion einer Benutzerschnittstelle und wenigstens eine die Funktion einer Erfassungseinrichtung ausübt, und die jeweils über integrierte datenverarbeitende Mittel und Mittel zur drahtlosen Datenübertragung verfügen. Die Erfindung betrifft ferner ein Verfahren zur Herstellung, zum Betrieb und zur Wartung dieser Transporteinrichtung.

Transporteinrichtungen mit wenigstens einem Transportgerät sind bekannt erstens als nur aus einem Transportgerät bestehenden, bzw. mit diesem einen Transportgerät identischen Transporteinrichtungen und zweitens als Transporteinrichtungen mit mehreren Transportgeräten.

Aus nur einem Transportgerät bestehende Transporteinrichtungen, die keine elektronischen Einrichtungen aufweisen und keine Stromversorgung benötigen, lassen sich in drei Kategorien unterteilen:
Transporteinrichtungen bzw. Transportgeräte der ersten Kategorie stapeln vertikal und weisen weder ein Fahrgestell noch Rollen auf. Zur ersten Kategorie gehören insbesondere in Selbstbedienungsgeschäften eingesetzte Körbe und im Gastronomiebetrieb eingesetzte Tabletts. Transporteinrichtungen bzw. Transportgeräte der zweiten Kategorie stapeln vertikal, und weisen Rollen, jedoch kein Fahrgestell auf. Zur zweiten Kategorie gehören insbesondere in Selbstbedienungsgeschäften eingesetzte Rollkörbe. Transporteinrichtungen bzw. Transportgeräte der dritten Kategorie stapeln horizontal und weisen Rollen und ein Fahrgestell auf. Zur dritten Kategorie zählen beispielhaft insbesondere Einkaufswagen, Plattformwagen, Gepäckwagen, Rollcontainer, sowie stapelbare Formen von Tablettwagen und Stapelkarren. Auf Rollen bewegbare Transportgeräte sind meist nicht motorisiert. Eine wahlweise vorhandene Motorisierung kann das Bewegen von Hand erleichtern oder auch autonome Mobilität des Transportgeräts ermöglichen.

Transporteinrichtungen mit mehreren Transportgeräten lassen sich unterteilen in Stapelverbünde gleicher Transportgeräte, sowie in für die Nutzung als solche bestimmte Kombinationen unterschiedlicher Transportgeräte. Eine solche Kombination ist beispielsweise gebildet durch Einkaufskörbe und einen diese Einkaufskörbe tragenden Plattformwagen, oder durch tragbare Warenbehälter und einen Rollcontainer, der die Warenbehälter trägt.

Das wenigstens eine Transportgerät weist wenigstens einen Griff auf. Griffe sind insbesondere Schiebegriffe und Tragegriffe, sowie verwandte Einrichtungen, die dem manuellen und/oder maschinellen Bewegen und Positionieren der Transportgeräte dienen.

Es sind Transportgeräte der dritten Kategorie bekannt, an denen stromversorgte elektronische Einrichtungen mit der Funktion einer Benutzerschnittstelle und/ oder einer Erfassungseinrichtung angeordnet sind. Im Falle mehrerer stromversorgter elektronischer Einrichtungen sind diese mit Kabeln verbunden. Diese dienen nicht nur der Stromversorgung, sondern auch dem gegenseitigen Erkennen der elektronischen Einrichtungen, dem Datenaustausch und der Integration der elektronischen Einrichtungen zu einem datenverarbeitenden System. Die mobil eingesetzten Transportgeräte sind während des wiederholt erforderlichen Aufladens ihres Stromspeichers an eine Ladestation gebunden und währenddessen nicht nutzbar.

Die WO 2000 073971 A1 beschreibt ein Transportgerät und ein aus mehreren elektronischen Einrichtungen gebildetes System, das am Transportgerät befestigt und wieder abgenommen werden kann. Es ist vorgesehen, dass eine datenverarbeitende und datenspeichernde Einrichtung, ein Barcode Reader, eine Lichtschranke, und eine Waage nur dann mit Strom versorgt sind, wenn diese Einrichtungen am Transportgerät angeordnet sind. Dafür vorgesehene elektrische Steckverbindungen zwischen den Einrichtungen und dem Transportgerät sollen zugleich als Kommunikations-Port für die jeweilige Einrichtung dienen. Die Steckverbindungen sollen somit der Stromversorgung, dem Datenaustausch und der mechanischen Befestigung am Transportgerät dienen. Die Kommunikation zwischen Transportgerät und einer Kasse soll mit Hilfe eines Kabelports oder drahtlos erfolgen.

Transportgeräte mit stromversorgten elektronischen Einrichtungen sowie deren Verwendung sind ferner beschrieben in den Dokumenten US 4,071,740 A, US 5,287,266 A, US 5,361,871 A, JP 2004 110805 A, US 6,484,939 B1, US 5,773,954 A, US 5,821,513 A, US 5,250,789 A, US 6,910,697 B2, US 2006 / 0289637 A1, US 8,751,318 B2, WO 2016 / 135142 A1, US 2018 / 0025412 A1, US 2018/0218351 A1 und EP 1583050 A1. Die Erfassung von Erkennungsmitteln an Transportgeräten ist in der WO 2016 / 019936 A2 beschrieben. Bekannt ist ferner das "AIC" bzw. "Artificial Intelligence Cart" genannte Produkt der Firma Tracxpoint. Insbesondere Kabel und Steckverbindungen machen Transportgeräte mit stromversorgten elektronischen Einrichtungen teuer in der Herstellung, aufwendig in der Wartung, fehleranfällig, und beschränken deren Anwendungsfelder und Praxistauglichkeit. Weiterhin offenbart WO 2011/088568 A1 einen Einkaufswagen mit Kameras und US 2015/271483 A1 ein Kamerasystem mit drahtlos kommunizierenden Kameras deren Aufnahmefelder sich überlappen.

Es ist Aufgabe der Erfindung, eine Transporteinrichtung der eingangs genannten Art so weiterzuentwickeln, dass eine möglichst große Typenvielfalt der Transporteinrichtungen ermöglicht und die Transportgeräte frei zu Transporteinrichtungen mit mehreren Transportgeräten kombiniert werden können. Herstellung, Wartung, und Betrieb sollen kostenreduzierend vereinfacht werden. Die Lösung der Aufgabe ist im kennzeichnenden Teil des Anspruchs 1 beschrieben.

Die Erfindung erreicht vorteilhaft, dass die Transporteinrichtung mit wenigstens einem Transportgerät autonom und selbsttätig jede stromversorgte elektronische Einrichtung betreffend und einander zuordenbar eine Kennung und die räumliche Position an der Transporteinrichtung ermittelt. Dies ermöglicht eine Systemintegration der stromversorgten elektronischen Einrichtungen, für die vorteilhaft weder Kabelverbindungen noch Tätigkeiten zur Herstellung von drahtlosen Datenverbindungen nötig sind. Die von nicht stromversorgten Transportgeräten bekannten ausschließlich mechanischen Montagearbeiten der Herstellung und Wartung sowie der manuellen oder mechanischen Kombination von Transportgeräten zu Transporteinrichtungen mit mehreren Transportgeräten können vorteilhaft unverändert beibehalten werden.

Vorteilhaft bestehen für die technische Umsetzung eine Anzahl von Optionen.

Jede stromversorgte elektronische Einrichtung verfügt über Mittel zur drahtlosen Stromversorgung. Als solche eignen sich integrierte Stromspeicher in Kombination mit einer integrierten Einrichtung zum Aufladen oder Auswechseln des jeweiligen Stromspeichers. Für die Sicherheit des Transportgeräts vorteilhaft kann so ein Stromfluss zwischen den elektronischen Einrichtungen am Transportgerät vermieden werden.

Als Einrichtungen zum Auswechseln des Stromspeichers kommen Einrichtungen zur Aufnahme wechselbarer Batterien in Frage. Sollen die Batterien im Rahmen üblicher Wartungszyklen der Transportgeräte getauscht werden, sind jedoch mindestens sechsmonatige Batterielaufzeiten erforderlich, was deren Anwendung auf nur wenig Strom verbrauchende Einrichtungen beschränkt. Die bevorzugte Ausführung der Erfindung verwendet deshalb als Einrichtung zum Aufladen des integrierten Stromspeichers eine induktive Ladeeinrichtung und vermeidet vorteilhaft Kabelverbindungen ebenso wie den Austausch von Batterien. Gemäß einer vorteilhaften Ausführung ist die Transporteinrichtung konfiguriert, einander zugeordnete Kennungen und räumliche Positionsdaten der wenigstens zwei stromversorgten elektronischen Einrichtungen zum Initiieren, Steuern, oder Beenden induktiver Ladeprozesse zu verwenden, die der Stromversorgung der wenigstens zwei elektronischen Einrichtungen dienen. Die Transporteinrichtung kann hierfür die genannten Daten an eine Energie-spendende Einrichtung zur Auswertung übermitteln und/oder in Abhängigkeit dieser Daten generierte Steuersignale senden und/oder die elektronischen Einrichtungen der Transporteinrichtung selbst steuern. Der Ladeprozess kann hierdurch im Hinblick auf die räumliche Position der Energie empfangenden Einrichtungen relativ zur induktiven Energiequelle und im Hinblick auf deren individuellen Energiebedarf optimiert werden. Es lassen sich ferner Daten gewinnen im Hinblick auf Energieeffizienz und benötigter Ladedauer und -frequenz, die für unterschiedliche Transporteinrichtungen und Anwendungsfälle höchst unterschiedlich sein können. Bevorzugt dient die drahtlose induktive Ladeeinrichtung nicht nur dem Laden des Stromspeichers der jeweiligen Einrichtung, sondern auch als Transmitter oder versorgt innerhalb der gleichen stromversorgten elektronischen Einrichtung auch einen Transmitter mit Energie, der für die induktive Energieübertragung an wenigstens eine weitere stromversorgte elektronische Einrichtung bestimmt ist. Das bietet die Möglichkeit zwischen den Einrichtungen eines Transportgeräts, bevorzugt von einer einen großen Stromspeicher aufweisenden Einrichtung an eine Einrichtung mit geringem Strombedarf, sowie zwischen Transportgeräten Energie zu übertragen. Ferner kann so zwischen in einem Stapelverbund angeordneten Transportgeräten Energie übertragen werden. Drahtlose induktive Ladeeinrichtungen lassen sich beispielsweise mit RF-Power Receiver ICs realisieren, wie sie beispielweise bekannt sind durch die Produkte DA2210 oder DA2223 WattUp des Herstellers Energous mit Sitz in San Jose, USA, siehe energous.com. Auch sei in diesem Zusammenhang auf die Schutzrechte der Fa. Witricity mit Sitz in 02472 Watertown, USA verwiesen. Mit Hilfe eines derartigen Ladesystems können alle elektronischen Einrichtungen einer Transporteinrichtung mit wenigstens einem Transportgerät aufgeladen werden. Bevorzugt geschieht dies in einem Stapelverbund gleicher Transportgeräte.

Jede stromversorgte elektronische Einrichtung ist mit integrierten Mitteln zur drahtlosen Datenübertragung ausgestattet. Als solche eignen sich bekannte, Daten drahtlos sendende und/oder empfangende Einrichtungen, wobei außer elektromagnetischen Wellen auch Ultraschallwellen als Medium nutzbar sind. Dafür stehen vorteilhaft preisgünstige, standardisierte Bauteile und Software zur Verfügung. Die Integration von Mitteln zur drahtlosen Stromversorgung und Mitteln zur drahtlosen Datenübertragung ermöglicht vorteilhaft eine nur mechanische Montage der Einrichtungen am Transportgerät, da die elektronischen Funktionen einschließlich elektronischer Steuerungseinrichtungen bereits autark und aktiv vorhanden sind. Es wird somit in Folge nur mechanischer Montage ein aktiver Betriebszustand des Transportgeräts ermöglicht, in dem von wenigstens einer stromversorgten elektronischen Einrichtung weitere stromversorgte elektronische Einrichtungen anhand ihrer Erkennungsmittel individuell erkannt werden. Bei der Herstellung des Transportgeräts können die stromversorgten elektronischen Einrichtungen vorteilhaft wahlweise bereits vor der Montage mit Strom versorgt sein, oder erst im Anschluß an die Montage mit Strom versorgt werden.

Das zumindest im aktiven Betriebszustand und unter Verwendung der Mittel zur drahtlosen Datenübertragung maschinell lesbare Erkennungsmittel jeder elektronischen Einrichtung individualisiert jede elektronische Einrichtung durch eine Kennung, so dass diese von anderen, gleichen oder verschiedenen Einrichtungen unterscheidbar und adressierbar ist.

Gemäß einer vorteilhaften Ausführung verfügt eine zu montierende elektronische Einrichtung bereits über eine individualisierende Kennung, bevorzugt gespeichert auf ROM. Sie kann jedoch auch erst nach der Montage generiert oder individualisierend verändert werden.

Jede stromversorgte elektronische Einrichtung verfügt über Mittel zur Datenverarbeitung. In Frage kommen je nach Anwendung kleinste SoC- bzw. System-ona-chip-Bauteile, insbesondere im Fall von ihre Umwelt erfassenden Erfassungseinrichtungen, ebenso wie am Transportgerät angeordnete Tablett-Computer, insbesondere im Fall von Benutzerschnittstellen. Mittel zur Datenverarbeitung sind insbesondere Steuerungseinrichtungen, bevorzugt als eng in das technische System eingebundenes embedded system, und umfassendere Datenverarbeitungseinrichtungen, die nicht oder nicht nur die Funktion einer Steuerung erfüllen. Datenverarbeitungseinrichtungen eignen sich insbesondere dazu, die Systemintegration der stromversorgten elektronischen Einrichtungen aufrechtzuerhalten und die vorgesehenen Anwendungen zu unterstützen.

Gemäß einer vorteilhaften Ausführung ist die wenigstens eine Datenverarbeitungseinrichtung in eine der stromversorgten elektronischen Einrichtungen integriert, wobei sich besonders diejenige anbietet, die die Funktion einer Benutzerschnittstelle aufweist und allein für diese Funktion eine Datenverarbeitungseinrichtung benötigt. Die wenigstens eine elektronische Steuerungseinrichtung dieser Einrichtung kann dann mit der Datenverarbeitungseinrichtung identisch sein. Sie kann jedoch auch getrennt als weitere stromversorgte elektronische Einrichtung am Transportgerät angeordnet sein. Die Datenverarbeitungseinrichtung speichert die Kennungen drahtlos ausgelesener Erkennungsmittel und die Daten festgestellter räumlicher Anordnung der stromversorgten elektronischen Einrichtungen, so dass diese einander zugeordnet werden können. Dies wiederum unterstützt vorteilhaft eine Reihe von Anwendungen. Dafür benötigte Computerprogramme lassen sich serienweise vor-installieren, so dass zu montierende, mit einer Datenverarbeitungseinrichtung ausgestattete elektronische Einrichtungen auch über diese notwendige Komponente verfügen. Dies ermöglicht vorteilhaft eine Transporteinrichtung mit wenigstens einem Transportgerät, die, sobald sie hergestellt, montiert, oder aufgebaut oder im Zuge der Wartung wiederhergestellt und mit Strom versorgt ist, einschließlich ihrer stromversorgten elektronischen Einrichtungen autark und automatisch betriebsbereit ist.

Das drahtlose Auslesen von Erkennungsmitteln stromversorgter elektronischer Einrichtungen in Kombination mit der Feststellung ihrer räumlichen Anordnung an der Transporteinrichtung mit wenigstens einem Transportgerät ermöglicht ein zweifelsfreies und automatisches Erkennen der Zusammengehörigkeit der an der Transporteinrichtung angeordneten elektronischen Einrichtungen vorteilhaft ohne zwischen den elektronischen Einrichtungen angeordnete Strom- oder Datenkabel. Weder das Auslesen der Erkennungsmittel noch das Feststellen der räumlichen Anordnung allein sind geeignet, dies zu erreichen. Ohne Erkennungsmittel bzw. ohne individualisierende Kennungen sind die elektronischen Einrichtungen nicht adressierbar. Mit Erkennungsmitteln sind sie adressierbar, aber noch immer nicht als zur Transporteinrichtung gehörig identifizierbar und von nicht dazugehörenden elektronischen Einrichtungen unterscheidbar. Erst durch die erfinderische Kombination von Erkennungsmitteln und festgestellter räumlicher Position gelingen Identifizierung und Adressierbarkeit. Damit ist eine automatische Systemintegration ermöglicht, so dass wie bei rein mechanischen Transportgeräten eine mechanische Montage zur Herstellung und Wartung ausreicht. Analog beschränkt sich manuelles Kombinieren bzw. Aufbauen einer Transporteinrichtung auf eine mechanische Tätigkeit.

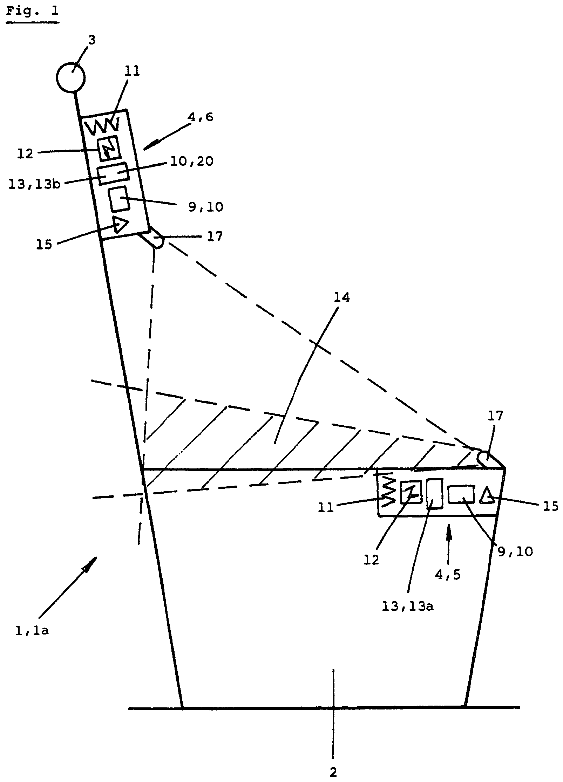

Wie die räumliche Anordnung am besten festgestellt wird, hängt von der Art und Anordnung der elektronischen Einrichtungen ab. Geeignete Ausführungen sind in der Beschreibung zu Fig. 1 genannt.

Diese Beispiele zeigen, dass die für die Erfindung essentielle Funktion der räumlichen Positionsbestimmung mit Hilfe ohnehin vorhandener Mittel und damit vorteilhaft mit marginalen Zusatzkosten erreichbar ist.

Im Gegensatz zu einer nur programmiertechnisch festgelegten Zuordnung eröffnet erst die Feststellung einer tatsächlichen räumlichen Anordnung die im Rahmen der Erfindung wichtigen Möglichkeiten der Selbstüberwachung und Selbstprüfung der Transporteinrichtung.

Gemäß einer vorteilhaften Ausführung ist die Transporteinrichtung konfiguriert, Daten zu erstellen, die den Zustand oder Zustandsveränderungen der Transporteinrichtung oder von Teilen der Transporteinrichtung, insbesondere das Vorhandensein und/oder die Konfiguration und/oder die Anordnung und/oder die Funktion und/oder die Beschädigung oder Nichtbeschädigung und/oder den bestimmungsgemäßen oder nicht bestimmungsgemäßen Gebrauch betreffen. Die Transporteinrichtung ist ferner konfiguriert, den früheren und/oder gegenwärtigen Zustand oder Zustandsveränderungen der Transporteinrichtung betreffende Daten unter Verwendung der wenigstens einen Benutzerschnittstelle einem Nutzer verfügbar zu machen und/oder an nicht zur Transporteinrichtung gehörende datenverarbeitende Einrichtungen drahtlos zu übermitteln. In Folge der Zuordnung von Kennungen und Positionsdaten und bei fortwährender Stromversorgung der elektronischen Einrichtungen wird ein für deren Nutzung bestimmter Betriebszustand der Transporteinrichtung herstellt, währenddessen durch die Transporteinrichtung mit Hilfe der wenigstens zwei stromversorgten elektronischen Einrichtungen und unter Verwendung wenigstens einer Erfassungseinrichtung Herstellung und/oder Wartung und/oder Gebrauch und/oder Beschädigung der Transporteinrichtung erfasst werden und diesbezügliche Daten, vor allem Bilddaten, Meßdaten und daraus abgeleitete Daten, unter Verwendung wenigstens einer Datenverarbeitungseinrichtung gespeichert und/oder unter Verwendung wenigstens einer Benutzerschnittstelle durch optische und/ oder akustische Signale erkennbar gemacht und/oder diesbezügliche Daten mit Hilfe einer drahtlosen Datenverbindung übermittelt werden.

Eine ausreichend genaue Feststellung der Positionen der elektronischen Einrichtungen unterstützt insbesondere das Erfassen von Deformation, Bruch, Verlust von Teilen, und ähnliche Schäden, sowie das Erfassen von Vibrationsverhalten, das auf beschädigte Rollen oder ungeeigneten Untergrund oder Gefahrensituationen hinweisen kann. In Kombination mit einer Selbstwahrnehmung der Transporteinrichtung in Form von Kamerabildern und/oder sonstiger von Sensoren gewonnener Daten lassen sich automatisch für Sicherheit, Einsatz, und Wartung der Transporteinrichtung und deren Transportgeräte wichtige Informationen gewinnen und es kann ein Nutzer über eine Benutzerschnittstelle diesbezüglich benachrichtigt werden. Den sicheren und sachgerechten Einsatz von Transportgeräten insbesondere in Märkten zu gewährleisten, ist für die Marktbetreiber bekanntlich eine große Herausforderung, da die Transportgeräte von zahlreichen Kunden der Märkte kaum kontrollierbar verwendet werden. Diese Herausforderung zu bewältigen wird umso wichtiger, je werthaltiger Transporteinrichtungen werden und je mehr Anwendungsprozesse diese fehlerfrei unterstützen sollen.

Ein weiterer, bedeutsamer Vorteil einer möglichst genauen räumlichen Positionsbestimmung ist die Verwendung der Daten wenigstens einer ersten Erfassungseinrichtung zur Korrektur störender Einflüsse oder Signale, die wenigstens eine zweite Erfassungseinrichtung betreffen. Gemäß einer vorteilhaften Ausführung ist die Transporteinrichtung konfiguriert, erstens mit Hilfe wenigstens einer ersten Erfassungseinrichtung fortwährend die Position wenigstens einer stromversorgten elektronischen Einrichtung betreffend räumliche Positionsdaten zu generieren, wobei Positionsveränderungen als Störsignal eines auf die Transporteinrichtung wirkenden Störeinflusses erfasst werden, zweitens die generierten Positionsdaten dazu zu verwenden, die Wirkung des Störeinflusses auf wenigstens eine zweite Erfassungseinrichtung zu ermitteln und drittens die von der wenigstens einen zweiten zweiten Erfassungseinrichtung generierten Daten unter Berücksichtigung des Störsignals zu kalibrieren und/oder fortwährend zu entrauschen. Die genannten drei Schritte eines durch diese Konfiguration unterstützten Verfahrens werden bevorzugt fortlaufend und parallel während des Einsatzes der Transporteinrichtung durchgeführt. So eignen sich beispielsweise Daten optisch registrierter Vibrationen oder Beschleunigungen, um Daten einer Waage zu entrauschen, da deren Kraftsensoren den gleichen Vibrationen oder Beschleunigungen ausgesetzt sind und so der Beitrag dieser Störeinflüsse vom Meßergebnis getrennt und das Wiegen von Ware auch auf in Bewegung befindlichen Transportgeräten präzise möglich ist. Die Befestigung einer Kamera an der Transporteinrichtung kann hierfür flexibel oder gefedert sein, damit Störsignale verstärkt und das Entrauschen einer Waage verbessert werden. Die erfinderische Transporteinrichtung mit wenigstens einem Transportgerät ist vorteilhaft für wichtige Anwendungsprozesse. Beispielsweise ist diese besonders geeignet für ein Verfahren zur Positionsbestimmung im Einsatzraum, wie aus der US 2018/0025412 A1 bekannt, da die Erfassung räumlicher Positionen der elektronischen Einrichtungen unter Verwendung bereits vorhandener Mittel auf die Erfassung des Einsatzraums erweitert werden kann. Die Erfindung erleichtert ferner den Einsatz erster elektronischer Einrichtungen am wenigstens einen Transportgerät für das maschinelle Lernen zweiter elektronischer Einrichtungen. Beispielsweise kann das Scannen von Barcodes durch den Nutzer dazu verwendet werden, eine optische Warenerkennung zu trainieren. In diesem Fall identifiziert der Barcode die Ware eindeutig und diese eindeutige Information wird verwendet, um korrekte optische Erkennung zu bestätigen und nicht korrekte optische Erkennung zu korrigieren. Machine-Learning-Algorithmen können unter Verwendung dieser Information die optische Warenerkennung verbessern.

Es ist in Selbstbedienungsmärkten üblich, Kunden eine Auswahl an unterschiedlichen Transportgeräten anzubieten. Wenigstens ein Einkaufswagentyp und zusätzlich ein Rollkorb oder ein Handkorb ist die Mindestausstattung eines Discount Stores. Größere Märkte, Shopping Malls, oder Flughäfen integrieren oft noch ein Catering-Angebot, in dem Tabletts verwendet werden. Fachmärkte verwenden zusätzlich noch unterschiedliche Plattformwagen. Transportgeräte werden häufig zu Transporteinrichtungen mit mehreren Transportgeräten kombiniert, beispielsweise Einkaufskörbe tragenden Einkaufswagen.

Neu und vorteilhaft ist die Erfindung von der Bauart des Transportgeräts und von der Konfiguration einer Transporteinrichtung mit wenigstens einem Transportgerät in hohem Maße unabhängig und auf alle drei Kategorien von Transportgeräten anwendbar. Dies ermöglicht eine Kategorien- und Typen-übergreifende Standardisierung, Teilegleichheit, und Einbindung unterschiedlicher Transportgeräte in vereinheitlichte Anwendungsprozesse.

Gemäß einer ersten vorteilhaften Ausführung beanspruchen die wenigstens zwei elektronischen Einrichtungen eines Transportgeräts im Stapelverbund mehrerer gleicher Transportgeräte zwei verschiedene Stapeltoträume. Die wenigstens zwei elektronischen Einrichtungen sind bevorzugt am Griff und/oder an der Warenablageeinrichtung und/oder an einem wahlweise vorhandenen Fahrgestell und/oder an einer wahlweise vorhandenen Kindersitzeinrichtung, wie sie beispielsweise in der WO 2012/034556 A2, Fig.6 und Fig.7 gezeigt ist, angeordnet.

Gemäß einer weiteren vorteilhaften Ausführung ist wenigstens eine elektronische Einrichtung mit einem Griff oder mit einer Warenablageeinrichtung oder mit dem wahlweise vorhandenen Fahrgestell des Transportgeräts formschlüssig verbunden derart, dass die formschlüssige Verbindung die vorgesehene Position der elektronischen Einrichtung zu weiteren am Transportgerät angeordneten elektronischen Einrichtungen erzwingt. Eine rechteckige oder nahezu rechteckige und horizontale oder leicht geneigte Fläche kann als gemeinsames Merkmal der Warenablageeinrichtungen angesehen werden, egal ob diese Bestandteil eines Tabletts, eines Korbs, oder eines Wagens sind. Die geneigte Fläche kann insbesondere eine Plattform, ein Korbboden oder auch ein Rahmen zur Aufnahme eines Korbes sein. Dies ermöglicht beispielhaft durch Standardteile gebildete elektronische Einrichtungen, die an den Ecken oder zentral zwischen zwei Ecken positioniert sind. An den Ecken platzierte elektronische Einrichtungen können zugleich die Funktion von Eckschutzteilen, zentral angeordnete Einrichtungen die Funktion einer Stoßleiste übernehmen, bzw. außen als solche geformt sein und so konventionelle Eckschutzteile und Stoßleisten ersetzen.

Eine analoge Standardisierung im Griffbereich wird durch stets gleiche ergonomische Anforderungen unterstützt. Zu unterscheiden sind insbesondere vier übliche Grifftypen: der mit einer Hand gehaltene Griffbügel eines Einkaufskorbs, der am Ende einer ausziehbaren Stange angeordnete Griff eines Rollkorbs, der eine Griffstange für zwei Hände aufweisende Griff eines Einkaufswagens, Plattformwagens, oder Gepäckwagens sowie ein Paar separater Griffe für jeweils eine Hand an einem Rollcontainer. Die genannten Griffe weisen neben von der Hand verdeckten eigentlichen Griffstellen weitere Abschnitte oder Teile auf, die sich für die Anordnung von elektronischen Einrichtungen eignen. Beispielsweise eignen sich Abschnitte am Griffbügel zu beiden Seiten der Griffstelle, die ausziehbare Stange eines Rollkorbgriffes, der zentrale Abschnitt oder der links und rechts äußerste Abschnitt eines Griffes mit Griffstange, sowie Befestigungsabschnitte an den Griffen eines Griffpaares. Es sind weitere Griffformen und Anordnungen der elektronischen Einrichtungen an den Griffen denkbar.

Im Falle aller Varianten ist es vorteilhaft, wenn die elektronische Einrichtung ein Gehäuse aufweist, das zugleich eine an der jeweiligen Position zweckmäßige mechanische Funktion erfüllt, beispielsweise, wie bereits beschrieben, als Eckschutzteil oder Stoßleiste oder auch als Verstärkungsteil, Befestigungsteil, und dergleichen. Ferner ist es vorteilhaft, wenn die Montage mit einfachen Mitteln ermöglicht ist, zum Beispiel durch Verwendung eines Gummihammers. Hierfür weisen die Gehäuse der elektronischen Einrichtungen Schlagflächen und Rastverbindungen zum Verrasten an den Montagestellen auf.

Die vorgeschlagene Standardisierung der elektronischen Einrichtungen, sowohl ihrer Bestandteile, als auch ihrer äußeren Form, ist nicht nur vorteilhaft für die Massenfertigung und die Wartung, sondern insbesondere auch für die Einbindung in Anwendungsprozesse. Beispielsweise wird ein auf Deep Learning basierendes Erkennungssystem zur Erfassung von Waren wesentlich einfacher zu implementieren sein, wenn die verwendeten Kameras oder Sensoren immer gleich sind. Da in diesem Anwendungsfall die Fehlertoleranz äußerst gering ist, ist die vorgeschlagene Standardisierung unverzichtbar. Auch im Falle induktiver Stromversorgung ist die Standardisierung der Teile ein entscheidender Vorteil. Diese lassen sich somit in gleicher Weise laden und der Stromverbrauch während der Nutzung ist besser abschätzbar.

Weisen Transporteinrichtungen in der Industrie oder im Logistikumfeld eines Warenlagers ebenso wie im Fall der Nutzung durch Endkunden gleiche elektronische Einrichtungen auf, so lassen sich mehrere Stufen einer Lieferkette vorteilhaft durch einheitliche und umfassende Prozesse unterstützen. Elektronische Einrichtungen der beschriebenen Art können, abgesehen von der Gehäuseform, für unterschiedliche Montagestellen mit identischen Teilen realisiert werden. Gemäß dieser besonders vorteilhaften Ausführung unterscheiden sich wenigstens zwei elektronische Einrichtungen nur durch ihr Gehäuse und ihre Kennung. Sie lassen sich so, wiederum mit lediglich geänderter Gehäuseform auch in weitere Lager- oder Ladeneinrichtungen integrieren, beispielsweise in Regale oder Displays, und es lassen sich die mit den Transportgeräten allein realisierbaren Funktionen erweitern und ergänzen. Die Ermöglichung einer solchen erweiterten Systembildung ist ein wesentlicher Vorteil der erfinderischen Transporteinrichtung. Einheitliche Hardware unterstützt so einheitliche Software und ermöglicht ein für den Nutzer konsistentes und schlüssiges Anwendungskonzept.

Die Erfindung wird im Folgenden anhand von Ausführungsbeispielen erläutert. Es zeigt
Fig. 1 eine Transporteinrichtung mit einem Transportgerät mit zwei stromversorgten elektronischen Einrichtungen;
Fig. 2 ein Transportgerät der ersten oder zweiten Kategorie;
Fig. 3 ein Transportgerät der dritten Kategorie;
Fig. 4 zwei Transportgeräte der ersten oder zweiten Kategorie;
Fig. 5 zwei Transportgeräte der dritten Kategorie;
Fig. 6 eine als Benutzerschnittstelle dienende elektronische Einrichtung an einer Montagestelle;
Fig. 7 eine als Erfassungseinrichtung dienende elektronische Einrichtung an einer Montagestelle;
Fig. 8 eine Transporteinrichtung mit mehreren Transportgeräten.

Fig. 1 zeigt eine Transporteinrichtung 1 mit wenigstens einem, durch ein Erkennungsmittel 9 individualisiertem Transportgerät 1a, das wenigstens eine Warenablageeinrichtung 2 und wenigstens einen Griff 3 aufweist und das mit jeweils gleichen Transportgeräten 1a stapelbar ist, wobei die Transporteinrichtung 1 wenigstens zwei, an einem gleichen und/oder an verschiedenen Transportgeräten 1a angeordnete, stromversorgte elektronische Einrichtungen 4 aufweist, von denen wenigstens eine die Funktion einer Benutzerschnittstelle 6 und wenigstens eine die Funktion einer Erfassungseinrichtung 5 ausübt, und die jeweils über integrierte datenverarbeitende Mittel 13 und Mittel 15 zur drahtlosen Datenübertragung verfügen.

Jede stromversorgte elektronische Einrichtung 4 ist durch wenigstens ein, eine maschinell erfassbare Kennung 10 verwendendes Erkennungsmittel 9 individualisierbar. Die stromversorgten elektronischen Einrichtungen 4 sind derart an der Transporteinrichtung 1 angeordnet sind, dass von der wenigstens einen Erfassungseinrichtung 5 die räumliche Position wenigstens einer weiteren elektronischen Einrichtung 4 an der Transporteinrichtung 1 ermittelbar ist. Beispielhaft befindet sich die Erfassungseinrichtung 5 im Blickfeld der Kamera 17 der Benutzerschnittstelle. Die Transporteinrichtung 1 ist konfiguriert, unter Verwendung der datenverarbeitenden Mittel 13 und der Mittel zur drahtlosen Datenübertragung 15 für wenigstens zwei der stromversorgten elektronischen Einrichtungen 4 einander zuordenbar die jeweilige Kennung 10 und die jeweilige räumliche Position an der Transporteinrichtung 1 zu ermitteln.

Die erfinderische Lösung wird zunächst losgelöst von der in Fig. 1 gewählten beispielhaften Darstellung eines Rollkorbs näher erläutert:
Die aus dem Stand der Technik bekannte wechselseitige Erfassung von Kennungen 10 elektronischer Einrichtungen 4, beispielsweise mit Hilfe von Transpondern, führt nicht zum Ziel, da keine räumlichen Positionen an der Transporteinrichtung 1 ermittelt und jeweils einer Kennung 10 zugeordnet werden können. Das System weiß, welche Einrichtungen 4 vorhanden sind, jedoch nicht wo sie sind. Die aus dem Stand der Technik ebenfalls bekannte wechselseitige Erfassung räumlicher Positionen, beispielsweise mit Hilfe einander erfassender Kameras, leistet keine Erfassung von Kennungen 10, so dass eine Zuordnung von Kennungen 10 und räumlichen Positionen ebenfalls nicht ermöglicht ist.

Das System weiß, an welchen Positionen Einrichtungen 4 angeordnet sind, jedoch nicht welche. Eine einfache Kombination der beiden bekannten Vorgehensweisen führt noch immer nicht zur erfinderischen Lösung, da zwar sowohl Kennungen 10 als auch räumliche Positionen ermittelt werden, diese jedoch nicht einander zuordenbar sind. Das System weiß, welche Einrichtungen 4 vorhanden sind, und wo Einrichtungen 4 angeordnet sind, jedoch nicht welche Einrichtung 4 wo angeordnet ist. Zunächst ohne die verwendeten Mittel zu konkretisieren lassen sich Konfigurationen beschreiben, durch die die Zuordnung erreicht wird. Hierbei wesentlich ist, dass die Erfassung der Position an einer bestimmten, von gleichartigen Transporteinrichtungen 1 unterscheidbaren und somit individualisierten Transporteinrichtung 1 erreicht wird.

Gemäß einer beispielhaften ersten Konfiguration ist wenigstens eine erste elektronische Einrichtung 4 konfiguriert, ihre Position an einer noch nicht individualisierten Transporteinrichtung 1 zu erfassen. Die Transporteinrichtung 4 weist wenigstens eine zweite elektronische Einrichtung 4 auf, deren Position an gleichartigen Transporteinrichtungen 1 immer gleich ist. Die wenigstens eine erste elektronische Einrichtung 4 und die wenigstens eine zweite elektronische Einrichtung 4 sind ferner konfiguriert, ein gleiches Signal oder, hierzu äquivalent, einander zuordenbare unterschiedliche Signale zu registrieren, die geeignet sind, die Transporteinrichtung 1 zu individualisieren. Anhand des von ersten und zweiten Einrichtungen 4 erfassten Signals und mit Hilfe von Datenaustausch zwischen den Einrichtungen 4 ermitteln die Einrichtungen 4, dass sie an der gleichen, somit individualisierten Transporteinrichtung angeordnet sind. Entweder verfügen die Einrichtungen 4 bereits über Kennungen 10, die somit der jeweiligen räumlichen Position zuordenbar sind, oder es werden in Folge der Feststellung der Anordnung an einer bestimmten Transporteinrichtung 1 Kennungen 10 generiert. Durch Austausch von Kennungen 10 und räumlichen Positionsdaten 20 wird die Integration der elektronischen Einrichtungen 4 der Transporteinrichtung 1 erreicht und besteht auch fort, wenn das Signal nicht mehr vorhanden ist. Da die wenigstens eine erste elektronische Einrichtung 4 konfiguriert ist, ihre Position selbst zu erfassen, ordnet sie ihre Positionsdaten 20 ihrer Kennung 10 zu. Anhand des erfassten Signals registriert die wenigstens eine erste elektronische Einrichtung 4 das Vorhandensein der wenigstens einen zweiten elektronischen Einrichtung 4, wobei aufgrund von deren immer gleichen Position an gleichartigen Transporteinrichtungen 1 ihre Position von der wenigstens einen ersten elektronischen Einrichtung 4 bestimmbar ist. Beispielhaft liegt die wenigstens eine erste elektronische Einrichtung 4 als Erfassungseinrichtung 5 mit einer Kamera und die wenigstens eine zweite elektronische Einrichtung 4 als Erfassungseinrichtung 5 mit einem Kraftsensor vor. Einander zuordenbare Signale werden durch eine, auf der Warenablageeinrichtung 2 abgelegte Ware geliefert, wobei diese von der wengistens einen Kamera 17 optisch erfasst wird und wobei der wenigstens eine Kraftsensor ihr Gewicht registriert. Wahlweise kann, insbesondere bei schwerer Ware, die Kamera 17 auch eine Deformation der Transporteinrichtung 1 oder eine Lageveränderung von Teilen der Transporteinrichtung 1 registrieren, die einem gemessenen Gewicht zuordenbar ist. In anderen Fällen als dem beschriebenen kann das Signal beispielsweise durch ein Erkennungsmittel 9 gegeben sein, das der Transporteinrichtung 1, jedoch nicht einer bestimmten elektronischen Einrichtung 4 zugeordnet ist, beispielsweise ein individuelles Nummernschild.

Gemäß einer beispielhaften zweiten Konfiguration ist eine erste elektronische Einrichtung 4 geeignet, einander zugeordnet Kennung 10 und Position einer zweiten elektronischen Einrichtung 4 zu erfassen und die einander zugeordneten Kennungen 10 und Positionsdaten 20 an die zweite elektronische Einrichtung 4 zu übermitteln. Die zweite elektronische Einrichtung 4 stellt hierdurch die Position der ersten elektronischen Einrichtung 4 relativ zu ihrer eigenen Position 4 fest und generiert einander zugeordnet eine Kennung 10 und Positionsdaten 20 der ersten elektronischen Einrichtung 4. Werden diese Daten an die erste elektronische Einrichtung 4 übermittelt, so kann diese die Daten speichern und sich damit individualisieren, selbst wenn sie anfangs weder über eine Kennung noch über Daten der eigenen Position verfügte. Beispielhaft ist die erste elektronische Einrichtung 4 eine Erfassungseinrichtung 5 mit einer Kamera 17 und die zweite elektronische Einrichtung 4 eine Benutzerschnittstelle 6, deren Gehäuse außen sichtbar ein Erkennungsmittel 9 aufweist, das die Kamera 17 dazu verwendet, die der Benutzerschnittstelle 6 zugeordnete Kennung 10 zugleich mit ihrer Position zu erfassen.

Es lassen sich zahlreiche Varianten der beiden beispielhaften Konfigurationen und Lösungen finden, die mehrere Varianten kombinieren. Die Bauart, die Ausstattung mit elektronischen Einrichtungen, und die Verwendung der Transporteinrichtung 1 bestimmen wesentlich, welche Lösung optimal ist.

Die von den Erkennungsmitteln 9 verwendeten maschinell erfassbaren Kennungen 10 sind insbesondere Kennungen 10, die aus einem Speichermedium gelesen oder durch eine Kamera 17 oder einen Scanner erfasst werden können, so dass Erkennungsmittel 9 insbesondere als elektronisches Speichermedium oder als Träger eines sichtbaren Codes, beispielsweise eines QR Codes vorliegen können. Die Kennungen 10 können permanent vorhanden sein oder bedarfsweise generiert werden. Die wenigstens eine Erfassungseinrichtung 5 kann wahlweise anhand der Wahrnehmung zumindest eines Teils der Transporteinrichtung 1 auch die eigene Position an der Transporteinrichtung 1 ermitteln.

Die Konfiguration der Transporteinrichtung 1, einander zuordenbar Kennungen 10 und räumliche Positionen zu ermitteln, umfasst insbesondere die Wahl geeigneter und zueinander passender Mittel und Einrichtungen, sowohl deren räumliche Anordnung als auch deren informationstechnologische Ausführung. So muß, gemäß einer beispielhaften Ausführung, die Kamera 17 einer Erfassungseinrichtung 5 auf ein Erkennungsmittel 9 gerichtet und geeignet sein, einen vom Erkennungsmittel getragenen QR Code auszulesen, und es müssen geeignete datenverarbeitende Mittel 13 vorhanden sein, um Kennungen 10 und räumliche Positionsdaten 20 einander zuzuordnen. Geeignete datenverarbeitende Mittel 13 erfordern sowohl geeignete Hardware als auch die Verarbeitung und Zuordnung von Kennungen 10 und Positionsdaten 20 leistende Software. Die geeignete Konfiguration wird somit weder durch mechanische, erfassungstechnologische, oder informationstechnologische Mittel allein, sondern nur durch deren in dieser Schrift beschriebene Integration erreicht.

Fig. 1 zeigt eine Transporteinrichtung 1 mit nur einem Transportgerät 1a bzw. eine Transporteinrichtung 1, die identisch mit dem einen Transportgerät 1a ist. Die Transporteinrichtung 1 kann ebenso durch eine Kombination mehrerer Transportgeräte 1a gebildet sein, beispielsweise durch einen, einen oder mehrere Einkaufskörbe tragenden Transportwagen. Ist die Transporteinrichtung 1 durch mehrere Transportgeräte 1a gebildet, so nehmen die Transportgeräte 1a zueinander eine definierte Position ein, die es ermöglicht, die räumliche Position der elektronischen Einrichtungen 4 nicht nur am jeweiligen Transportgerät 1a, sondern auch an der Transporteinrichtung 1 insgesamt zu bestimmen. Aufgrund der definierten räumlichen Position mehrerer Transportgeräte 1a innerhalb einer Transporteinrichtung 1 sind die Lösungen für eine Transporteinrichtung 1 mit nur einem Transportgerät 1a und für eine Transporteinrichtung 1 mit mehr als einem Transportgerät 1a äquivalent.

Jedes Erkennungsmittel 9 verwendet eine maschinell erfassbare Kennung 10, wodurch die Individualisierung der stromversorgten elektronischen Einrichtungen 4 erreicht wird. Datenverarbeitende Mittel 13 liegen als Steuerungseinrichtung 13a und/oder als Datenverarbeitungseinrichtung 13b vor. Jede stromversorgte elektronische Einrichtung 4 ist mit integriertem Stromspeicher 12, mit einer integrierten Einrichtung 11 zum Aufladen oder Auswechseln des jeweiligen Stromspeichers 12 und mit integrierten Mitteln 15 zur drahtlosen Datenübertragung ausgestattet. Veranlasst durch den aktiven Betriebszustand, in dem die elektronischen Einrichtungen 4 stromversorgt sind, sind erstens von wenigstens einer stromversorgten elektronischen Einrichtung 4 weitere elektronische Einrichtungen 4 anhand ihrer Erkennungsmittel 9 individuell erkannt, es sind zweitens von wenigstens einer stromversorgten elektronischen Einrichtung 4 unter Verwendung wenigstens einer Erfassungseinrichtung 5 und wenigstens einer Datenverarbeitungseinrichtung 13b die räumliche Anordnung wenigstens einer weiteren stromversorgten elektronischen Einrichtung 4 an der Transporteinrichtung 1 sowie am jeweiligen Transportgerät 1a festgestellt und diese Anordnung betreffende räumliche Positionsdaten 20 generiert, und es sind drittens, für jede stromversorgte elektronische Einrichtung 4 Kennungen 10 und Positionsdaten 20 unter Verwendung wenigstens einer Datenverarbeitungseinrichtung 13b einander zuordenbar.

Erreicht wird dies durch ein Verfahren zur Herstellung, zum Betrieb, und zur Wartung der in Fig. 1 gezeigten Transporteinrichtung 1, gemäß der die Transporteinrichtung 1 autonom und selbsttätig für jede stromversorgte elektronische Einrichtung 4 einander zuordenbar eine Kennung 9 und die räumliche Position an der Transporteinrichtung 1 ermittelt. Wahlweise geschieht dies automatisch allein durch die Stromversorgung der elektronischen Einrichtungen 4 oder es kann zusätzlich ein Startsignal, etwa das Betätigen eines Schalters an der Transporteinrichtung 1 oder ein drahtlos übermitteltes Steuersignal erforderlich sein. Das genannte Verfahren ist wesentlicher Bestandteil der Erfindung.

In einem ersten Verfahrensschritt wird von wenigstens einer stromversorgten elektronischen Einrichtung 4 wenigstens eine weitere elektronische Einrichtung 4 anhand ihrer Erkennungsmittel 9 individuell erfasst. Zu diesem Zweck können die elektronischen Einrichtungen 4 Kennungen 10 aktiv übermitteln, oder es können passiv verfügbare Kennungen 10 aktiv erfasst werden, beispielsweise unter Verwendung aktiver und/oder passiver RFID-Tags. Die Kennungen 10 können dafür bereits vorhanden sein oder erst generiert werden. Mit welchen technischen Mitteln und auf welchen direkten oder indirekten Wegen die Kennungen 10 übermittelt werden, ist für die Erfindung unerheblich. Entscheidend ist, dass als Ergebnis des Auslese- bzw. Übermittlungsvorgangs die Kennungen 10 wenigstens einer Datenverarbeitungseinrichtung 13b verfügbar sind.

In einem zweiten Verfahrensschritt ermittelt wenigstens eine Erfassungseinrichtung 5 die räumliche Position wenigstens einer weiteren elektronischen Einrichtung 4 an der Transporteinrichtung 1 und/oder es ermitteln wenigstens zwei Erfassungseinrichtungen 5 mittels der Erfassung eines gemeinsamen Raumbereichs 14 ihre Positionen. Die Erfassung eines Raumbereichs 14 ist der Erfassung von Objekten im Raumbereich 14 äquivalent. Wenigstens eine Datenverarbeitungseinrichtung 13b wird dabei eingesetzt, um räumliche Positionsdaten 20 zu generieren.

Erster und zweiter Verfahrensschritt können wahlweise auch in umgekehrter Reihenfolge oder simultan oder als nur ein Schritt durchgeführt werden können. Wird beispielsweise als Objekt im Raumbereich 14 ein Aufkleber mit einem QR Code erfasst, der als Erkennungsmittel 9 eine elektronische Einrichtung 4 individualisiert, so sind räumliche Anordnung und Kennung 10 in nur einem Schritt ermittelt. Bevorzugt sind erster und zweiter Schritt parallel ablaufende Vorgänge oder ein einziger Vorgang.

In einem dritten Verfahrensschritt ermittelt die Transporteinrichtung 1 unter Verwendung der datenverarbeitenden Mittel 13 und der Mittel zur drahtlosen Datenübertragung 15 für wenigstens zwei stromversorgte elektronische Einrichtungen 4 einander zuordenbar die jeweilige Kennung 10 und die jeweilige räumliche Position an der Transporteinrichtung 1.

Gemäß einer ersten bevorzugten Ausführung wird von wenigstens einer stromversorgten elektronischen Einrichtung 4, die eine Erfassungseinrichtung 5 ist, zusammen mit von dieser Erfassungseinrichtung 5 generierten Bilddaten oder als Bestandteil der Bilddaten die eigene Kennung 10 und/oder die erfasste Kennung einer weiteren elektronischen Einrichtung 4 an eine weitere elektronische Einrichtung 4 drahtlos übertragen. Beispielsweise wird von wenigstens zwei elektronischen Einrichtungen 4, die Erfassungseinrichtungen sind, ein Raumbereich 14 erfasst und es sind die dabei generierten Bilddaten zur Übertragung zusammen mit den Kennungen 10 der jeweiligen elektronischen Einrichtungen 4 bestimmt. Die Bilddaten und Kennungen 10 werden drahtlos übertragen, wobei die Zuordnung von Kennungen 10 und Bilddaten jeweils durch die gemeinsame Übertragung erreicht wird. Aufgrund des erfassten Raumbereichs 14 lassen sich die Bilddaten dazu verwenden, mit Hilfe einer Datenverarbeitungseinrichtung 13b räumliche Positionsdaten 20 der die Bilddaten produzierenden Einrichtungen 4 zu berechnen, die wiederum den Kennungen 10 zuordenbar sind. Dafür verfügt beispielhaft eine erste, die Funktion einer Benutzerschnittstelle 6 aufweisende elektronische Einrichtung 4 auch über eine Kamera 17 und somit über eine Erfassungseinrichtung 5. Wenigstens eine zweite elektronische Einrichtung 4 dient als Erfassungseinrichtung 5 und verfügt ebenfalls über eine Kamera 17. Die Kamera 17 der ersten und die Kamera 17 der zweiten Einrichtung 4 haben ein sich überschneidendes Blickfeld, d.h. es gibt einen Raumbereich 14, der von beiden Kameras 17 erfasst wird. Mit Hilfe einer Datenverarbeitungseinrichtung 13b der ersten elektronischen Einrichtung 4, 6, die mit einem dafür geeigneten Computerprogramm ausgestattet ist, werden in diesem Raumbereich 14 befindliche, von beiden Kameras 17 erfasste Gegenstände oder Vorgänge als identisch identifiziert, so dass aus der von den Kameras 17 gelieferten Bildinformation die Position der Kameras 17 und somit auch der elektronischen Einrichtungen 4 berechenbar ist. Werden dann Kennungen 10 und Bilddaten, aus denen Positionsdaten 20 berechnet werden, zusammen übermittelt, so ist deren Zuordnung eindeutig und in einem einzigen Vorgang erreicht. Da die Transporteinrichtung 1 mit wenigstens einem Transportgerät 1a für den Transport von Waren bestimmt ist, können im Raumbereich 14 von mehreren Erfassungseinrichtungen 5 erfasste Waren bekannter Größe und Form verwendet werden, um die Position der erfassenden Einrichtungen relativ zu der erfassten Ware mit hoher Genauigkeit zu bestimmen. Ebenso eignen sich hierfür von der wenigstens einen Kamera erfasste Ausschnitte der Transporteinrichtung.

Gemäß einer zweiten bevorzugten Ausführung wird die räumliche Anordnung wenigstens einer stromversorgten elektronischen Einrichtung 4 unter Verwendung von optischen und/oder akustischen, aktiv generierten oder passiv verfügbaren Signals festgestellt, durch das eine Kennung 10 codiert und übermittelt ist. Beispielsweise kann eine elektronische Einrichtung 4 durch einen von außen sichtbaren QR Code individualisiert sein, oder es kann ein Infrarotsignal eine Bitfolge codieren und so eine Kennung 10 übermittelt werden. Ultraschallsignale eignen sich ebenfalls sowohl für die Übertragung einer Kennung 10 als auch für die Feststellung von Entfernung und Position. Eine räumliche Begrenzung von Sende- und Empfangsrichtungen kann vorteilhaft sein und zur Feststellung räumlicher Anordnung eingesetzt werden. Dies trifft zu im Fall der beispielhaften Verwendung eines Infrarotsignals, ist jedoch weniger entscheidend, wenn ein von außen sichtbarer QR Code erfasst wird. Auch in diesem Fall unterstützt ein einziger Vorgang die Zuordnung von Kennung 10 und räumlichen Positionsdaten 20.

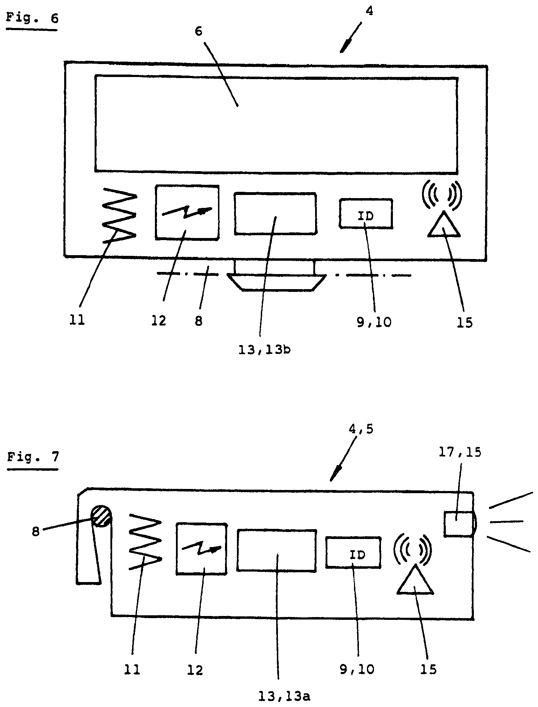

Eine dritte bevorzugte Ausführung der Transporteinrichtung 1 verwendet ein Transportgerät 1a mit wenigstens einer stromversorgten elektronischen Einrichtung 4, für die eine erste und eine zweite räumliche Position am Transportgerät 1a vorgesehen ist, wobei in beiden Positionen die elektronische Einrichtung 4 mit einer gleichen Montagestelle 8 verbunden ist, wobei zwischen der wenigstens einen, die erste räumliche Position einnehmenden elektronischen Einrichtung 4 und der Montagestelle 8, siehe Fig.6 und Fig.7, ein stromleitender Kontakt besteht und wobei zwischen der wenigstens einen, die zweite räumliche Position einnehmenden elektronischen Einrichtung 4 und der Montagestelle 8 kein stromleitender Kontakt besteht. Diese dritte Ausführung eignet sich insbesondere für aus Metall gefertigte Transportgeräte 1a. Anstelle von Kabeln dienen die Metallteile des Transportgeräts 1a als Stromleiter zwischen stromversorgten elektronischen Einrichtungen 4. Stromfluss zwischen stromversorgten elektronischen Einrichtungen 4 wird hier von wenigsten einer Einrichtung 4 erstens dazu verwendet, weitere Einrichtungen 4 anhand ihrer Erkennungsmittel 9 individuell zu erkennen und wird simultan zweitens dafür verwendet, die räumliche Anordnung der Einrichtungen 4 am Transportgerät 1a festzustellen. Im Fall dieser Ausführung dient der stromleitende Kontakt als Erfassungseinrichtung 5, die elektrische Signale empfängt. Der elektrische Kontakt kommt nur bei einer bestimmten Position der elektronischen Einrichtung 4 an der dafür vorgesehenen Montagestelle 8 zustande, so dass durch dessen Zustandekommen die räumliche Position der elektronischen Einrichtung 4 am Transportgerät 1a ermittelt ist. Es ist gemäß dieser Ausführung auch möglich, dass erst unter Nutzung des Stromflusses Erkennungsmittel 9 programmiert und mit individualisierenden Kennungen 10 ausgestattet werden. Während des Gebrauchs der Transportgeräte 1a ist ein Stromfluss durch Metallteile zu vermeiden, die in Kontakt mit Personen oder Waren stehen können. Während die erste räumliche Position der wenigstens einen stromversorgten elektronischen Einrichtung 4 an der Montagestelle 8 vorübergehend der Übermittlung von Kennungen und Positionsdaten in einem Setup-Prozess dient, dient die zweite, dauerhafte Position der Herstellung des Gebrauchszustands. Dies ermöglicht einen zweistufigen Montageprozess. In einem ersten Schritt werden stromversorgte elektronische Einrichtungen 4 in der ersten Position vormontiert. Es folgt ein automatischer Setup-Prozess, der innerhalb einer oder weniger Sekunden abgeschlossen ist. Dem folgt wiederum ein zweiter Montageschritt, in dem elektronische Einrichtungen 4 aus der ersten in die zweite Position bewegt werden. Dies kann auf einfachste Weise, beispielsweise durch Schlag mit einem Gummihammer erfolgen.

Je nach Bauart und Verwendung des Transportmittels lassen sich die drei beispielhaften Ausführungen auch kombinieren und es lassen sich weitere, analoge Ausführungen finden.

Gemäß der drei beispielhaften Ausführungen sind für jede stromversorgte elektronische Einrichtung 4 Kennungen 10 und Positionsdaten 20 einander zuordenbar. In einem dritten Schritt erfolgt diese Zuordnung unter Verwendung wenigstens einer Datenverarbeitungseinrichtung 13b der die Daten zusammenführenden Einrichtung 4. Die Kennungen 10 und räumlichen Positionsdaten 20 miteinander integrierter elektronischer Einrichtungen 4 können insbesondere in wenigstens einer der elektronischen Einrichtungen 4 gespeichert werden. Die gespeicherten Kennungen 10 werden im Fall des Austauschs einer elektronischen Einrichtung 4 automatisch aktualisiert, nicht aber, wenn Signale aus anderen Quellen, beispielsweise von einem nahe befindlichen, nicht zur Transporteinrichtung 1 gehörenden weiteren Transportgerät 1a registriert werden.

Die erfinderische Transporteinrichtung 1 mit wenigstens einem Transportgerät 1a kann mit einer Vielzahl unterschiedlicher Einrichtungen 4 realisiert und unterschiedlichen Erfordernissen angepasst werden.

Die Funktion einer Benutzerschnittstelle 6 aufweisende Einrichtungen 4 sind beispielsweise optische oder akustische Signalgeber, Bildschirme oder Touchscreens. Die Funktion einer Erfassungseinrichtung 5 aufweisende Einrichtungen 4 sind beispielsweise mit Barcode-Scanner, Kameras 17, Infrarotsensoren, UItraschallsensoren, oder Kraftsensoren ausgestattete Einrichtungen 4. Elektronische Einrichtungen 4 können sowohl die Funktion einer Benutzerschnittstelle 6 als auch einer Erfassungseinrichtung 5 aufweisen. Beispielsweise kann ein Barcode-Scanner ein Tonsignal abgeben oder es können Sensoren in eine Einrichtung mit einem Touchscreen integriert sein. Generell weisen Benutzerschnittstellen 6 wenigstens eine für einen Benutzer bestimmte bzw. an einen Benutzer adressierte Funktion auf, während Erfassungseinrichtungen 5 Gegenstände oder Vorgänge in ihrer Umwelt erfassen. Lediglich Signal-gebende oder Signalempfangende Einrichtungen, insbesondere RFID-Tags, die weder als Benutzerschnittstelle 6 noch als Erfassungseinrichtung 5 dienen, sind keine stromversorgten elektronischen Einrichtungen 4 im Sinne der Erfindung. Mit Benutzerschnittstellen 6 und Erfassungseinrichtungen 5 ausgestattete Transportmittel 1 dienen insbesondere Logistik- und Handelsprozessen, beispielsweise dem Erfassen der Ware und dem Abrechnen der Ware durch einen einkaufenden Kunden, oder dem Erfassen von Lagerbewegungen in einem Warenlager.

Als Erkennungsmittel 9 sind sämtliche Mittel zu verstehen, die geeignet sind, einen das Erkennungsmittel 9 tragenden Gegenstand identifizierbar und von gleichartigen Gegenständen unterscheidbar zu machen, insbesondere in Form von Zeichencodes, Barcodes, QR-Codes, sowie Daten tragende Mittel wie etwa Transponder. Als Kennung 10 sind diese Unterscheidung ermöglichende Merkmale zu verstehen, beispielsweise Seriennummern oder individuelle Codes, sowie deren Vorliegen als Daten.

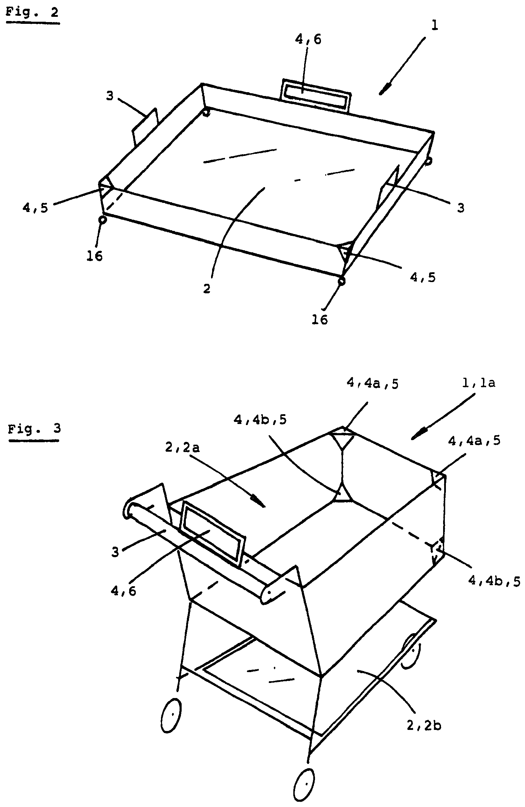

Fig. 2 zeigt ein Transportgerät 1a mit einer als flachem Korb gestalteten Warenablageeinrichtung 2, einem Paar Griffe 3, sowie drei elektronischen Einrichtungen 4, wobei zwei elektronische Einrichtungen 4 Erfassungseinrichtungen 5 und eine elektronische Einrichtung 4 eine Benutzerschnittstelle 6 ist. Wahlweise sind am Boden der Warenablageeinrichtung 2 Rollen 16 angeordnet. Anstelle eines Griffpaares 3 kann, wie im Fall von Handkörben, ein an der Warenablageeinrichtung 2 schwenkbar befestigter und mittig angeordneter Griff 3 treten. Elektronische Einrichtungen 4 können in anderer Anzahl und an anderen Positionen als in Fig. 1 oder Fig. 2 dargestellt angeordnet sein. Aus dem in Fig. 2 dargestellten Grundprinzip lassen sich insbesondere Tabletts, Einkaufskörbe und Rollkörbe ableiten.

Fig. 3 zeigt ein Transportgerät 1a beispielhaft in Gestalt eines Einkaufswagens. Es weist eine als Korb gestaltete erste Warenablageeinrichtung 2a auf und eine als Plattform oder als Bodenrost gestaltete zweite Warenablageeinrichtung 2b. Rückseitig befindet sich ein Griff 3 in Form eines Schiebegriffes, an dem zentral eine elektronische Einrichtung 4 als Benutzerschnittstelle 6 angeordnet ist. Am vorderen Ende des Korbes befinden sich als Erfassungseinrichtungen 5 gestaltete erste elektronische Einrichtungen 4a oben und zweite elektronische Einrichtungen 4b unten. Die oberen elektronischen Einrichtungen 4a sind geeignet,

Ware auf der ersten Warenablageeinrichtung 2a, d.h. im Korb zu erfassen, während die unteren elektronischen Einrichtungen 4b geeignet sind, Ware auf der zweiten Warenablageeinrichtung 2b, d.h. auf der Plattform oder dem Bodenrost zu erfassen. Aus dem in Fig. 3 dargestellten Grundprinzip lassen sich insbesondere Einkaufswagen, Plattformwagen, Gepäckwagen, Rollcontainer, und Tablettwagen ableiten. Der Gegenstand der Erfindung ist jedoch nicht beschränkt auf Transporteinrichtungen 1 mit den genannten Transportgerätetypen, sondern umfasst auch weitere mögliche Typen stapelbarer Transportgeräte 1a. Einkaufswagengriffe 3 sind meist aus mehreren Teilen zusammengesetzt. Insbesondere ist eine Aufteilung in ein linkes Eckteil, ein Mittelteil und ein rechtes Eckteil von Vorteil für Herstellung, Montage, und Anpassung an unterschiedliche Wagenbreiten bzw. Grifflängen. Sollen Erfassungseinrichtungen 5 am Griff 3 dazu verwendet werden, die Position von Erfassungseinrichtungen 5 an den vorderen oberen Korbecken festzustellen, so ist eine Integration der Erfassungseinrichtungen 4 in Eckteile des Griffes 3 vorteilhaft. Eine Benutzerschnittstelle 6 ist hingegen bevorzugt zentral am Griff 3 anzuordnen, so dass der Benutzer eine Haltung in Schieberichtung des Transportgeräts 1a beibehalten kann, wenn er die Benutzerschnittstelle 6 verwendet. Es ist daher vorteilhaft, den gesamten aus Eckteilen und Mittelteil bestehenden Griff 3 mit einer stromversorgten elektronischen Einrichtung 4 auszustatten, deren Bestandteile sich auf Eckteile und Mittelteil verteilen und die durch mechanische Montage der Eckteile und des Mittelteils, vorzugsweise durch Steckverbindung, auch elektrisch und elektronisch integriert sind.

Wahlweise kann die als Benutzerschnittstelle dienende stromversorgte elektronische Einrichtung 4 am Transportgerät 1a permanent montiert sein oder abnehmbar durch ein mobiles Kommunikationsgerät, beispielsweise ein Smartphone oder ein Tablet gebildet sein, das am Transportgerät 1a eine definierte Position, z.B. in einer Halterung einnimmt. Entscheidend ist die definierte Position, unabhängig davon, mit welchen mechanischen Mitteln diese sichergestellt wird.

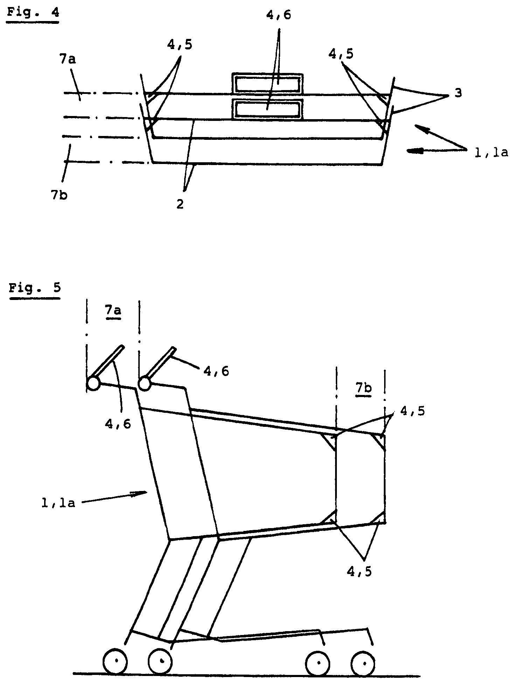

Fig. 4 zeigt zwei der Transportgeräte 1a in der in Fig. 2 dargestellten Ausführung in einem Stapelverbund. Aus Transportgeräten 1a gebildete Stapelverbünde weisen einen für das jeweilige Transportgerät 1a typischen Stapelabstand auf sowie in Abhängigkeit von Stapelabstand und Geometrie des Transportgeräts 1a und in Stapelrichtung vorne und hinten am Transportgerät 1a für das Stapeln nicht beanspruchte Stapeltoträume 7a, 7b. Die in Figur 4 dargestellten Griffe 3 und elektronischen Einrichtungen 4 in Form von Erfassungseinrichtungen 5 und Benutzerschnittstellen 6 sind in der Beschreibung zu Fig. 3 erläutert.

Fig. 5 zeigt zwei Transportgeräte 1a der in Fig. 3 dargestellten Ausführung. Diese Transportgeräte 1a der dritten Kategorie stapeln horizontal. Die als Benutzerschnittstelle 6 ausgeführte elektronische Einrichtung 4 hinten am Transportgerät 1a und die als Erfassungseinrichtungen 5 ausgeführten elektronischen Einrichtungen 4 befinden sich in zwei unterschiedlichen Stapeltoträumen 7a, 7b.

Fig. 6 zeigt eine elektronische Einrichtung 4 an einer Montagestelle 8. Die elektronische Einrichtung 4 dient als Benutzerschnittstelle 6. Sie ist durch ein Erkennungsmittel 9 mit drahtlos auslesbar gespeicherter Kennung 10 individualisiert. Mittel zur drahtlosen Stromversorgung 11, z.B. als induktive Ladeeinrichtung, sind dafür vorgesehen, einen Stromspeicher 12, hier eine Batterie, zu laden. Der Stromspeicher 12 versorgt eine Datenverarbeitungseinrichtung 13b, Mittel 15 zur drahtlosen Datenübertragung, z.B. zum Aufbau einer Bluetooth- oder WLAN-Verbindung, mit Strom. Zur elektronischen Einrichtung 4 gehört hier beispielhaft ein Touchscreen, der der Funktion der elektronischen Einrichtung 4 als Benutzerschnittstelle 6 dient.

Fig. 7 zeigt eine elektronische Einrichtung 4 an einer Montagestelle 8. Die elektronische Einrichtung 4 dient als Erfassungseinrichtung 5. Sie ist durch ein Erkennungsmittel 9 mit drahtlos auslesbarer bzw. erfassbarer Kennung 10 individualisiert. Mittel zur drahtlosen Stromversorgung 11, hier als eine drahtlose induktive Ladeeinrichtung 11a, z.B. als Empfängerspule oder als RF-Power Receiver IC, sind dafür vorgesehen, einen Stromspeicher 12, hier eine Batterie, zu laden. Der Stromspeicher 12 versorgt eine elektronische Steuerungseinrichtung 13a, und Mittel 15 zur drahtlosen Datenübertragung mit Strom. Zu den mit Strom versorgten Einrichtungen gehört hier beispielhaft eine Kamera 17, die der Funktion der elektronischen Einrichtung 4 als Erfassungseinrichtung 5 dient.

Fig. 6 und Fig. 7 zeigen beispielhafte Ausführungen. Andere Ausgestaltungen sind möglich. Gemeinsam ist den elektronischen Einrichtungen 4, dass sie autark sind. Sie benötigen weder Kabelverbindungen untereinander noch Kabelverbindungen zum Aufladen. Dafür verfügen Sie gemäß einer vorteilhaften Ausführung jeweils über eine drahtlose induktive Ladeeinrichtung 11a.

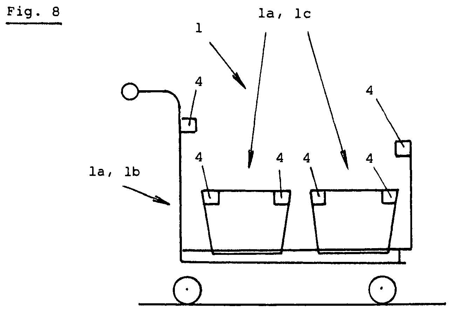

Fig. 8 zeigt eine Transporteinrichtung 1 mit wenigstens einem Transportgerät 1a, die beispielhaft gebildet ist durch ein erstes Transportgerät 1b in Form eines Transportwagens und zwei weitere Transportgeräte 1c in Form von Einkaufskörben. Das erste Transporgerät 1b und die zwei weiteren Transportgeräte 1c sind baulich so aufeinander abgestimmt, dass die weiteren Transportgeräte 1c am ersten Transportgerät 1b eine definierte Position einnehmen. Hierzu kann beispielsweise die als Plattform vorliegende Warenablageeinrichtung 2 Vertiefungen aufweisen, in die die weiteren Transportgeräte 1c genau passen. Durch die passgenaue Anordnung ist zusätzlich zur räumlichen Position der stromversorgten elektronischen Einrichtungen 4 eines jeden Transportgeräts 1b, 1c am jeweiligen Transportgerät 1b, 1c auch die räumliche Position aller stromversorgten Einrichtungen 4 an der Transporteinrichtung 1 insgesamt bestimmt. Die Systemintegration aller elektronischen Einrichtungen 4 der Transporteinrichtung 1 kann damit analog und äquivalent zur Systemintegration der stromversorgten elektronischen Einrichtungen 4 an nur einem Transportgerät 1b, 1c erreicht werden. Hierbei zeigt sich der Vorteil der Erfindung am deutlichsten. Transportgeräte 1b, 1c werden in getrennten Stapelverbünden von Transportwagen und Einkaufskörben an Sammelstellen bereitgehalten. Diesen Stapelverbünden werden sie wiederholt entnommen und zufällig zu Transporteinrichtungen 1 aus hier beispielhaft Transportwagen und Einkaufskörben kombiniert. Das bedeutet, dass sich bei jeder Neukombination die stromversorgten elektronischen Einrichtungen 4 der neu gebildeten Transporteinrichtung 1 gegenseitig als zusammengehörig identifizieren und als System integrieren müssen. Dies gilt unabhängig davon, ob auch die Stapelverbünde Transporteinrichtungen 1 sind oder ob im Stapelverbund nur jedes einzelne Transportgerät1a eine Transporteinrichtung ist. Praxistauglich ist die Integration mehrerer Transportgeräte 1a zu einer Transporteinrichtung 1 nur dann, wenn die Systemintegration autonom und in für den Nutzer nicht wahrnehmbar kurzer Zeitspanne bzw. ohne Wartezeit zuverlässig erfolgt. Eine Wartezeit kann auch dadurch vermieden werden, dass die in einer definierten Position verbleibenden stromversorgten elektronischen Einrichtungen 4 jede für sich eine Funktion für den Nutzer ausüben und sich irgendwann während des Nutzungsvorgangs als System integrieren. Beispielsweise können von verschiedenen Erfassungseinrichtungen 5 generierte Kameradaten lokal gespeichert und erst im Nachhinein in einer Datenverarbeitungseinrichtung 13b zusammengeführt werden. Die Problematik wiederholter Neukombination gilt analog auch für den in der Beschreibung zu Fig. 3 genannten Fall, in dem die als Benutzerschnittstelle 6 dienende stromversorgte elektronische Einrichtung 4 temporär an der Transporteinrichtung 1 mit wenigstens einem Transportgerät 1a bzw. an dem wenigstens einen Transportgerät 1a angeordnet ist. Die Transporteinrichtung 1 mit wenigstens einem Transportgerät 1a wird genau dann gebildet, wenn die für diese Transporteinrichtung 1 vorgesehenen stromversorgten elektronischen Einrichtungen 4, d.h. wenigstens eine Benutzerschnittstelle 6 und wenigstens eine Erfassungseinrichtung 5, bestimmbar an der Transporteinrichtung 1 eine vorgesehene räumliche Position einnehmen und die Transporteinrichtung 1 wird genau dann aufgelöst, wenn die stromversorgten elektronischen Einrichtungen 4 diese Position nicht mehr einnehmen. Es können hierbei bestimmte Konfigurationen, insbesondere mit programmiertechnischen Mitteln als Transporteinrichtung 1 definiert werden. Beispielsweise kann ein Einkaufswagen allein, ein Korb allein, sowie ein Einkaufswagen beladen mit einem Korb oder beladen mit zwei Körben als Transporteinrichtung 1 dienen, so dass ein einkaufender Kunde zwischen diesen Optionen frei wählen kann. Ebenso ist es zweckmäßig festzulegen, was keine Transporteinrichtung 1 mit wenigstens einem Transportgerät 1a ist oder was verschiedene Transporteinrichtungen 1 sind. Beispielsweise können erstens ein Transportwagen mit Körben, zweitens ein Stapelverbund der Transportwagen und drittens ein Stapelverbund der Körbe als unterschiedliche Transporteinrichtungen 1 definiert werden oder es kann festgelegt sein, dass die Stapelverbünde keine Transporteinrichtungen sind. Betrachtet man einen Stapelverbund als Ganzes, so ist die räumliche Position der stromversorgten elektronischen Einrichtungen 4 in diesem Stapelverbund eine andere als in der für den Gebrauch vorgesehenen Konfiguration einer Transporteinrichtung 1 mit wenigstens einem Transportgerät 1a. Nicht nur unterschiedliche räumliche Anordnungen sondern auch unerwünschte Konfigurationen lassen sich mit Hilfe der erfinderischen Lösung von den vorgesehenen Konfigurationen unterscheiden. Beispielsweise kann es zweckmäßig sein, dass unsichere Positionen, Ladendiebstahl begünstigende Positionen, etc. keine Systemintegration der stromversorgten elektronischen Einrichtungen unterstützen. Bekannte Pairing-Technologien, beispielsweise NFC oder Bluetooth leisten dies nicht, da sie lediglich innerhalb einer bestimmten Reichweite ein Signal registrieren, wodurch Anwesenheit, jedoch keine räumliche Anordnung bestimmt ist. Während im Fall bekannter Anwendungen dieser bekannten Technologien die räumliche Unbestimmtheit und damit räumliche Freiheit vorteilhaft ist, z.B. im Fall des Pairing eines Smartphones eines sich in einem Wohnraum frei bewegenden Nutzers mit einem Lautsprecher, ist die räumliche Unbestimmtheit im Falle einer Transporteinrichtung 1 mit wenigstens einem Transportgerät 1a nachteilig und macht wichtige Unterscheidungen unmöglich. Insbesondere in einem Stapelverbund gleicher Transportgeräte 1a, der keine für den Gebrauch bestimmte Transporteinrichtung 1 mit wenigstens einem Transportgerät 1a ist, sind sich nicht zu integrierende stromversorgte elektronische Einrichtungen 4 räumlich näher als für den Gebrauch zu integrierende. Deren Anordnung in zwei unterschiedlichen Stapeltoträumen bedeutet eine verglichen mit dem Stapelabstand vielfache Distanz zwischen den elektronischen Einrichtungen 4. Eine autonome Systemintegration nach dem Kriterium der Anwesenheit, räumlichen Nähe oder der Signalreichweite ist damit vollkommen ungeeignet, während das Kriterium der räumlichen Anordnung der stromversorgten elektronischen Einrichtungen 4 an der Transporteinrichtung 1 mit wenigstens einem Transportgerät 1a unabhängig von Bauart und Konfiguration der Transporteinrichtung 1 immer zuverlässig zusammengehörige elektronische Einrichtungen 4 als zusammengehörig identifiziert und von nicht zusammengehörigen unterscheidet.

Transporteinrichtungen 1 können aus nur einem oder aus mehreren Transportgeräten 1a gebildet sein, es kann je eine Transporteinrichtung 1 definiert sein für unterschiedliche Anwendungen gleicher Transportgeräte 1a, beispielsweise Bereitstellung in einem Stapelverbund als erste und Nutzung zum Transport von Ware als zweite Anwendung, und es können wechselnde Kombinationen von Transportgeräten 1a zu verschieden konfigurierten Transporteinrichtungen 1 vorgesehen sein. Diese umfassende Flexibilität und universelle Verwendbarkeit der Transporteinrichtungen 1 stützt sich auf die Eignung jeder Transporteinrichtung 1, für jede stromversorgte, elektronische Einrichtung 4 wenigstens eine Kennung "a" 10 und wenigstens drei Raumkoordinaten "x", "y", und "z" zu ermitteln und zur Systemintegration zu verwenden. Es wurden beispielhaft unterschiedliche technische Mittel und Wege beschrieben, die dies ermöglichen. Die Erkennungsmittel 9 können Kennungen 10 zeigen, speichern, und/oder generieren. Für das Zeigen einer Kennung 10 eignen sich insbesondere von außen sichtbare QR Codes oder Barcodes, wobei diese vorteilhaft an der stromversorgten elektronischen Einrichtung 4 und/oder an der Montagestelle 8 und/oder an einer sonstigen vorbestimmten und daher der elektronischen Einrichtung 4 zuordenbaren Position angeordnet sind. Da Transporteinrichtungen 1 für Transport, Kauf und Abrechnung von Waren Verwendung finden, ist die Sicherheit der Transporteinrichtung 1 gegen Manipulation wichtig. Ein hohes Maß an Sicherheit lässt sich durch Kombination sichtbarer, gespeicherter, und generierter Kennungen 10 erreichen. Beispielsweise kann eine stromversorgte elektronische Einrichtung 4 über eine intern gespeicherte, nicht sichtbare erste Kennung 10, über eine sichtbare, wenigstens einer Erfassungseinrichtung 5 gezeigte zweite Kennung 10, und evtl. noch über eine dritte, unter Verwendung von Bilddaten der elektronischen Einrichtung 4 berechnete und damit in Abhängigkeit ihrer Anordnung an der Transporteinrichtung 1 generierte dritte Kennung 10, beispielsweise einen Hashwert, individualisiert sein. Es kann vorgesehen sein, dass diese wenigstens zwei Kennungen 10 einer stromversorgten elektronischen Einrichtung 4 vorgesehene Werte oder Übereinstimmungen aufweisen müssen, damit die Transporteinrichtung 1 bestimmte Anwendungen, beispielsweise das Bewegen von Ware aus einem Markt oder die Abrechnung von Ware unterstützt. Im Fall von Funktionsstörungen oder Manipulation kann die Transporteinrichtung 1 autonom eine dies anzeigende Benachrichtigung senden und/ oder über die Benutzerschnittstelle 6 anzeigen.

Die Verwendung mehr als einer Kennung 10 und mehr als einer Art von Kennung 10 ist auch für eine robuste Systemintegration vorteilhaft, wie das folgende Beispiel zeigt:
Eine Transporteinrichtung 1 kann aus einem Transportwagen als erstem Transportgerät 1a und einem auf dem Transportwagen angeordneten Korb als zweitem Transportgerät 1a bestehen. Am Transportwagen ist eine Benutzerschnittstelle 6 angeordnet, die selbst keine Erfassungseinrichtung 5 ist, und es ist am Korb eine Erfassungseinrichtung 5 angeordnet, die keine Benutzerschnittstelle 6 ist. Im beispielhaften Anwendungsfall werden ständig wechselnd eine Anzahl Transportwagen und eine Anzahl Körbe zu solchen Transporteinrichtungen 1 kombiniert und wieder getrennt. Sobald ein Korb auf einem Transportwagen die vorgesehene Position einnimmt, erfasst die Erfassungseinrichtung 5 eine der Benutzerschnittstelle 6 zugeordnete sichtbare erste Kennung 10 und übermittelt diese zusammen mit ihrer eigenen, intern gespeicherten Kennung 10 drahtlos. Die Benutzerschnittstelle verifiziert die Daten anhand ihrer intern gespeicherten zweiten Kennung 10, die eineindeutig ihrer ersten, sichtbaren Kennung zugeordnet ist. Zufällig ist nahe des Transportwagens ein zweiter, nicht zur Transporteinrichtung 1 gehörender und nicht in der vorgesehenen Position am Transportwagen angeordneter Korb vorhanden, dessen Erfassungseinrichtung 5 ebenfalls die sichtbare erste Kennung 10 der Benutzerschnittstelle 6 erfasst. Die Zugehörigkeit bzw. Nichtzugehörigkeit zur Transporteinrichtung 1 wird nun anhand der räumlichen Positionsdaten 20 ermittelt. Die Erfassungseinrichtung 5 kann konfiguriert sein, die erfasste Kennung 10 nur dann zu übermitteln, wenn ihre eigene Position relativ zum sichtbaren, diese Kennung 10 zeigenden Erkennungsmittel 9 die vorgesehene Position ist. Dies ist anhand der Größe und Orientierung des Erkennungsmittels 9 im Blickfeld der Erfassungseinrichtung 5 feststellbar. Durch die Feststellung sind zugleich die Positionen der beiden stromversorgten elektronischen Einrichtungen 4 zueinander und an der Transporteinrichtung 1 festgestellt. Ferner kann die Erfassungseinrichtung 5 Bilddaten des erfassten Erkennungsmittels 9 an die Benutzerschnittstelle 6 übermitteln und die vorgesehene Position wird von der Benutzerschnittstelle 6 anhand dieser Daten verifiziert. Die beschriebenen Schritte zur Systemintegration sind robust, einfach und damit auch kostengünstig.

Es kann vorgesehen sein, dass der betriebsbereite Zustand der Transporteinrichtung 1 laufend unter Einbeziehung von Daten, die die Transporteinrichtung 1 mit wenigsten einem Transportgerät 1a allein oder gemeinsam mit weiteren Transporteinrichtungen 1 und wahlweise mit weiteren datenverarbeitenden Einrichtungen generiert, optimiert wird, wobei die Daten insbesondere den Zustand des die Transporteinrichtung 1 bildenden wenigstens einen Transportgeräts 1a und wahlweise einer Anzahl weiterer Transportgeräte 1a, das Nutzungsumfeld des oder der Transportgeräte 1a und wahlweise Nutzungsprofile individueller Nutzer betreffen.

Eine solche Optimierung ist äußerst zweckmäßig. Es können lokale Beleuchtungsverhältnisse, Warensortimente, und weitere Daten des Nutzungsumfelds herangezogen werden, um beispielsweise eine mit Erfassungseinrichtungen 5 durchgeführte optische Warenerkennung einem lokalen Umfeld anzupassen. Von großem Vorteil ist in diesem Zusammenhang das Nutzungsprofil individueller Nutzer. Ein typischer Kunde eines Selbstbedienungsgeschäfts wählt wiederholt nur einen kleinen Teil des Sortiments aus und es ist daher im Fall eines Nutzers ausreichend, wenn eine Erfassungseinrichtung 5 nur oder bevorzugt die im Falle dieses Nutzers in Frage kommenden Waren erfasst. Der Rechenaufwand wird hierdurch drastisch reduziert, da zwischen wesentlich weniger Artikeln unterschieden werden muss, und die Schnelligkeit, Zuverlässigkeit und Nutzerfreundlichkeit entsprechend erhöht.

Den Zustand des Transportgeräts 1a selbst betreffende Daten können insbesondere zur Kalibrierung, Fokussierung, oder auch für die Anpassung an Veränderungen eingesetzt werden. Veränderungen können beispielsweise Verformungen durch Beladen oder Entladen des Transportgeräts 1a, Lageveränderungen von Teilen in Folge des Stapelns der Transportgeräte 1a, Hinzufügen oder Entfernen von Teilen, usw. sein.

Abschließend sei die nutzbringende vielfältige Anwendbarkeit der erfinderischen Lösung an einem Praxisbeispiel beschrieben:
Eine erste Transporteinrichtung 1 in Form eines Einkaufswagens wird in Serie hergestellt. Die stromversorgten elektronischen Einrichtungen 4 dieser Transporteinrichtung 1 sind konfiguriert, die Qualität der Transporteinrichtung 1 zu prüfen, insbesondere Fertigungstoleranzen, korrekte Montage, die Qualität der Oberflächenbeschichtung und das Vorhandensein aller Teile. Die Benutzerschnittstelle 6 jeder Transporteinrichtung 1 zeigt evtl. Mängel an. Anhand der von den Transporteinrichtungen 1 übermittelten Daten wird vor Verschiffung ein Prüfprotokoll erstellt, das bestätigt, dass nur einwandfreie Einkaufswagen ausgeliefert werden.

Nach erfolgtem Transport werden die Einkaufswagen vom Kunden in Empfang genommen. Zwei der Einkaufswagen zeigen über die Benutzerschnittstelle 6 Transportschäden an. Anhand der von den Transporteinrichtungen 1 übermittelten Daten wird ein weiteres Prüfprotokoll erstellt, das die Transportschäden feststellt und bestätigt, dass die Lieferung ansonsten einwandfrei ist. Die Schäden lassen sich aufgrund beider Protokolle eindeutig dem Transport zuordnen. Der Kunde, ein Einzelhändler, setzt in seinem Markt als zweite Transporteinrichtung 1 Handkörbe ein, die von manchen Besuchern des Markts mit den Einkaufsw.agen zu einer dritten Transporteinrichtung 1 kombiniert werden, jedoch ebenso wie die Einkaufswagen auch unabhängig verwendet werden. Die wiederholte Systemintegration zu einer dritten Transporteinrichtung 1 ebenso wie deren wiederholte Auflösung und getrennte Verwendung von Einkaufswagen und Körben erfolgt selbsttätig durch die Transporteinrichtungen 1. Ein erster Nutzer platziert den Korb falsch, z.B. unsicher, auf dem Einkaufswagen. Die Benutzerschnittstelle 6 zeigt dem Benutzer an, dass die Platzierung des Korbs unsicher ist, und bittet um Korrektur. Der Benutzer korrigiert die Position und kann den Einkauf mit einer sicheren Transporteinrichtung 1 beginnen. Ein zweiter Benutzer versucht mit dem Ziel des Ladendiebstahls Ware unter dem Korbboden zu verstecken. Die für diesen Fall typische, falsche Anordnung des Korbs am Einkaufswagen wird erkannt und die Transporteinrichtung 1 informiert mittels drahtloser Datenübertragung Sicherheitspersonal. Ein dritter Nutzer überschreitet das zulässige Ladegewicht der Transporteinrichtung 1. Die dadurch verursachte Verformung wird von der Transporteinrichtung 1 registriert. Die Transporteinrichtung 1 warnt den Nutzer und übermittelt Daten einer evtl. verursachten Beschädigung. Eine elektronische Einrichtung 4 der Transporteinrichtung 1 wird beschädigt und muss ausgetauscht werden. Die Transporteinrichtung 1 ist konfiguriert, analog zum Erkennen von Qualitätsmängeln der Produktion oder Transportschäden, den Schaden zu erkennen und diesbezügliche Daten zu übermitteln. Nach einigen Jahren im Betrieb sind verzinkte Metallteile eines Einkaufswagens zu 50% korrodiert. Dies wird von der Erfassungseinrichtung 5 eines zusammen mit dem Einkaufswagen eine Transporteinrichtung 1 bildenden Korbs erfasst und die Transporteinrichtung 1 übermittelt diesbezügliche Daten, so dass die Teile neu verzinkt oder ausgetauscht werden können. Ein Korb ist gebrochen und unbrauchbar. Da die korrekte Positionierung des gebrochenen Korbs auf dem Einkaufswagen unmöglich ist, wird dies von der Transporteinrichtung 1 erkannt und der Korb kann ausgetauscht werden.

Wahlweise integriert ein einkaufender Kunde temporär sein eigenes mobiles Kommunikationsgerät in die Transporteinrichtung 1. Dies geschieht bevorzugt gemäß dem im Folgenden beschriebenen Verfahren, das im Anschluss an das im Anspruch 15 beschriebene Verfahren, d.h. unter Verwendung einer bereits hergestellten Transporteinrichtung 1 durchführbar ist. Hierfür wird in einem ersten Schritt das durch ein Erkennnungsmittel individualisierte mobile Kommunikationsgerät an einer dafür vorgesehenen Position einer ersten Transporteinrichtung 1 angeordnet wird. In einem zweiten Schritt wird, veranlasst durch den ersten Schritt, einander zuordenbar die Kennung 10 und die jeweilige räumliche Position des mobilen Kommunikationsgeräts an der Transporteinrichtung 1 von der ersten Transporteinrichtung 1 ermittelt. In einem dritten Schritt wird, veranlasst durch den zweiten Schritt, eine drahtlose Datenverbindung zwischen dem mobilen Kommunikationsgerät und der ersten Transporteinrichtung 1 aufgebaut und es wird mit dem mobilen Kommunikationsgerät als weiterer elektronischer Einrichtung 4 eine zweite Transporteinrichtung 1 gebildet. Die drahtlose Datenverbindung zwischen dem mobilen Kommunikationsgerät und der Transporteinrichtung 1 wird wahlweise aufrechterhalten oder nicht, wenn das mobile Kommunikationsgerät wieder von der vorgesehenen Position an der Transporteinrichtung 1 entfernt wird, wobei durch das wahlweise Entfernen des mobilen Kommunikationsgeräts wieder die erste Transporteinrichtung 1 gebildet wird. In einem vierten Schritt wird durch das Stapeln wenigstens eines Transportgeräts 1a der ersten Transporteinrichtung 1 mit gleichartigen Transportgeräten 1a eine mit dem Stapelverbund identische dritte Transporteinrichtung 1 gebildet, wobei spätestens durch das Bilden der dritten Transporteinrichtung 1 die Trennung der drahtlosen Datenverbindung zwischen dem mobilen Kommunikationsgerät und der Transporteinrichtung 1 veranlasst wird. Das beschriebene Verfahren ist nicht nur nutzbringend anwendbar im Einzelhandel, sondern auch in Logistik und Industrie.

Die beispielhaften Anwendungen und die Integration der Transporteinrichtung in unterschiedliche Prozesse bedeuten einen enormen Effizienz- und Informationsgewinn. Zahlreiche weitere, hier nicht geschilderte Anwendungen lassen sich gemäß den obigen Ausführungen auffinden. Die vorliegende Schrift zeigt einen Weg auf, die sehr heterogenen bekannten und evtl. weitere Transporteinrichtungen 1 unter Verwendung in hohem Maße einheitlicher technischer Mittel und Verfahrensschritte zu realisieren und zu betreiben.

## Patentansprüche

1. Transporteinrichtung (1) mit wenigstens einem, durch ein Erkennungsmittel (9) individualisiertem Transportgerät (1a), das wenigstens eine Warenablageeinrichtung (2) und wenigstens einen Griff (3) aufweist und das mit jeweils gleichen Transportgeräten (1a) stapelbar ist, wobei die Transporteinrichtung (1) wenigstens zwei, an einem gleichen und/oder an verschiedenen Transportgeräten (1a) angeordnete, stromversorgte elektronische Einrichtungen (4) aufweist, von denen wenigstens eine die Funktion einer Benutzerschnittstelle (6) und wenigstens eine die Funktion einer Erfassungseinrichtung (5) ausübt, und die jeweils über integrierte datenverarbeitende Mittel (13) und Mittel (15) zur drahtlosen Datenübertragung verfügen, **dadurch gekennzeichnet,**
- **dass** jede stromversorgte elektronische Einrichtung (4) durch wenigstens ein, eine maschinell erfassbare Kennung (10) verwendendes Erkennungsmittel (9) individualisierbar ist,
- **dass** die stromversorgten elektronischen Einrichtungen (4) derart an der Transporteinrichtung (1) angeordnet sind, dass von der wenigstens einen Erfassungseinrichtung (5) die räumliche Position wenigstens einer weiteren elektronischen Einrichtung (4) an der Transporteinrichtung (1) ermittelbar ist, und
- **dass** die Transporteinrichtung (1) konfiguriert ist, unter Verwendung der datenverarbeitenden Mittel (13) und der Mittel zur drahtlosen Datenübertragung (15) für wenigstens zwei der stromversorgten elektronischen Einrichtungen (4) einander zuordenbar die jeweilige Kennung (10) und die jeweilige räumliche Position an der Transporteinrichtung (1) zu ermitteln.

2. Transporteinrichtung nach Anspruch 1, **dadurch gekennzeichnet, dass** die Transporteinrichtung (1) ein Stapelverbund bestehend aus Transporteinrichtungen (1) ist.

3. Transporteinrichtung nach Anspruch 1, **dadurch gekennzeichnet, dass** das wenigstens eine Transportgerät (1a) ein Einkaufswagen, ein Plattformwagen, ein Gepäckwagen, ein Rollcontainer, ein Tablettwagen, ein Rollkorb, ein Einkaufskorb, ein Tablett, oder ein Stapelkarren ist.

4. Transporteinrichtung nach Anspruch 1, **dadurch gekennzeichnet, dass** die wenigstens zwei elektronischen Einrichtungen (4) am Griff (3) und/oder an der Warenablageeinrichtung (2) und/oder an einem wahlweise vorhandenen Fahrgestell (18) und/oder an einer wahlweise vorhandenen Kindersitzeinrichtung des wenigstens einen Transportgeräts (1a) angeordnet sind und im Stapelverbund mehrerer gleicher Transportgeräte (1a) zwei verschiedene Stapeltoträume (7a, 7b) beanspruchen.

5. Transporteinrichtungen nach Anspruch 1, **dadurch gekennzeichnet, dass** wenigstens eine elektronische Einrichtung (4) mit dem Griff (3) oder mit einer Warenablageeinrichtung (2) oder mit dem wahlweise vorhandenen Fahrgestell (18) des wenigstens einen Transportgeräts (1a) oder mit der wahlweise vorhandenen Kindersitzeinrichtung formschlüssig verbunden ist derart, dass die formschlüssige Verbindung die vorgesehene Position der elektronischen Einrichtung (4) zu weiteren am wenigstens einen Transportgerät (1a) angeordneten elektronischen Einrichtungen (4) erzwingt.

6. Transporteinrichtung nach Anspruch 1, **dadurch gekennzeichnet, dass** wenigstens zwei elektronische Einrichtungen (4) sich nur durch ihr Gehäuse und ihre Kennung unterscheiden.

7. Transporteinrichtung nach Anspruch 1, **dadurch gekennzeichnet, dass** die Transporteinrichtung konfiguriert ist, von einer Erfassungseinrichtung (5) deren eigene Kennung (10) und/oder die Kennung einer weiteren elektronischen Einrichtung (4) zusammen mit von dieser Erfassungseinrichtung (5) generierten Bilddaten oder als Bestandteil der Bilddaten an eine weitere elektronische Einrichtung (4) zu übertragen.

8. Transporteinrichtung nach Anspruch 1, **dadurch gekennzeichnet, dass** die räumliche Anordnung wenigstens einer stromversorgten elektronischen Einrichtung (4) unter Verwendung eines optischen und/oder akustischen, aktiv generierten oder passiv verfügbaren Signals festgestellt ist, durch das auch eine Kennung (10) codiert und übermittelt ist.

9. Transporteinrichtung nach Anspruch 1, **dadurch gekennzeichnet, dass** für wenigstens eine stromversorgte elektronische Einrichtung (4) eine erste und eine zweite räumliche Position an der Transporteinrichtung (1) vorgesehen ist, wobei in beiden Positionen die elektronische Einrichtung (4) mit der gleichen Montagestelle (8) am wenigstens einen Transportgerät (1a) verbunden ist, wobei zwischen der wenigstens einen, die erste räumliche Position einnehmenden elektronischen Einrichtung (4) und der Montagestellte (8) ein stromleitender Kontakt besteht und wobei zwischen der wenigstens einen, die zweite räumliche Position einnehmenden elektronischen Einrichtung (4) und der Montagestelle (8) kein stromleitender Kontakt besteht.

10. Transporteinrichtung nach Anspruch 1, **dadurch gekennzeichnet, dass** als Mittel (11) zur drahtlosen Stromversorgung eine drahtlose induktive Ladeeinrichtung (11a) dient, die wahlweise nur dem Laden eines lokalen Stromspeichers (12) der jeweiligen stromversorgten elektronischen Einrichtung (4) dient, oder auch als Transmitter dient oder innerhalb der gleichen stromversorgten elektronischen Einrichtung (4) der Stromversorgung eines Transmitters dient, der für die induktive Energieübertragung an wenigstens eine weitere stromversorgte elektronische Einrichtung (4) bestimmt ist.

11. Transporteinrichtung nach Anspruch 1, **dadurch gekennzeichnet, dass** die Transporteinrichtung (1) konfiguriert ist, einander zugeordnete Kennungen (10) und räumliche Positionsdaten (20) der wenigstens zwei stromversorgten elektronischen Einrichtungen (4) zum Initiieren, Steuern, oder Beenden induktiver Ladeprozesse zu verwenden, die der Stromversorgung der wenigstens zwei elektronischen Einrichtungen (4) dienen.

12. Transporteinrichtung nach Anspruch 1, **dadurch gekennzeichnet, dass** die Transporteinrichtung (1) konfiguriert ist, Daten zu erstellen, die den Zustand oder Zustandsveränderungen der Transporteinrichtung (1) oder von Teilen der Transporteinrichtung (1), insbesondere das Vorhandensein und/oder die Konfiguration und/oder die Anordnung und/oder die Funktion und/oder die Beschädigung oder Nichtbeschädigung und/oder den bestimmungsgemäßen oder nicht bestimmungsgemäßen Gebrauch betreffen.

13. Transporteinrichtung nach Anspruch 1, **dadurch gekennzeichnet, dass** die Transporteinrichtung (1) konfiguriert ist, den früheren und/oder gegenwärtigen Zustand oder Zustandsveränderungen der Transporteinrichtung betreffende Daten unter Verwendung der wenigstens einen Benutzerschnittstelle (6) einem Nutzer verfügbar zu machen und/oder an nicht zur Transporteinrichtung (1) gehörende datenverarbeitende Einrichtungen drahtlos zu übermitteln.

14. Transporteinrichtung nach Anspruch 1, **dadurch gekennzeichnet, dass** die Transporteinrichtung (1) konfiguriert ist, erstens mit Hilfe wenigstens einer ersten Erfassungseinrichtung (5) fortwährend die Position wenigstens einer ersten elektronischen Einrichtung (4) betreffend räumliche Positionsdaten (20) zu generieren, wobei Positionsveränderungen als Störsignal eines auf die Transporteinrichtung (1) wirkenden Störeinflusses erfasst werden, zweitens die generierten Positionsdaten (20) dazu zu verwenden, die Wirkung des Störeinflusses auf wenigstens eine zweite Erfassungseinrichtung (5) zu ermitteln und drittens die von der wenigstens einen zweiten Erfassungseinrichtung (5) generierten Daten unter Berücksichtigung des Störsignals zu kalibrieren und/oder fortwährend zu entrauschen.

15. Verfahren zur Herstellung, zur Inbetriebnahme und zur Wartung einer Transporteinrichtung nach Anspruch 1, **dadurch gekennzeichnet, dass**
- in einem ersten Schritt von wenigstens einer stromversorgten elektronischen Einrichtung (4) wenigstens eine weitere elektronische Einrichtung (4) anhand ihres Erkennungsmittels (9) individuell erfasst wird, dass
- in einem zweiten Schritt die wenigstens eine Erfassungseinrichtung (5) die räumliche Position wenigstens einer weiteren elektronischen Einrichtung (4) an der Transporteinrichtung (1) ermittelt und/oder dass wenigstens zwei Erfassungseinrichtungen (5) mittels der Erfassung eines gemeinsamen Raumbereichs (14) ihre Positionen ermitteln,
wobei erster und zweiter Schritt wahlweise auch in umgekehrter Reihenfolge oder simultan oder als nur ein Schritt durchgeführt werden können, und dass
- in einem dritten Schritt die Transporteinrichtung (1) unter Verwendung der datenverarbeitenden Mittel (13) und der Mittel zur drahtlosen Datenübertragung (15) für wenigstens zwei stromversorgte elektronische Einrichtungen (4) einander zuordenbar die jeweilige Kennung (10) und die jeweilige räumliche Position an der Transporteinrichtung (1) ermittelt.

16. Verfahren nach Anspruch 15, **dadurch gekennzeichnet, dass** durch das Bilden eines Stapelverbunds bestehend aus Transporteinrichtungen (1) wiederum eine Transporteinrichtung (1) gebildet wird.

17. Verfahren nach Anspruch 15, **dadurch gekennzeichnet,**
- **dass** in einem ersten Schritt ein durch ein Erkennnungsmittel (9) individualisiertes mobiles Kommunikationsgerät an einer dafür vorgesehenen Position einer ersten Transporteinrichtung (1) angeordnet wird,
- **dass** in einem zweiten Schritt veranlasst durch den ersten Schritt einander zuordenbar die Kennung (10) und die jeweilige räumliche Position des mobilen Kommunikationsgeräts an der Transporteinrichtung (1) von der ersten Transporteinrichtung (1) ermittelt wird,
- **dass** in einem dritten Schritt veranlasst durch den zweiten Schritt eine drahtlose Datenverbindung zwischen dem mobilen Kommunikationsgerät und der ersten Transporteinrichtung (1) aufgebaut wird und mit dem mobilen Kommunikationsgerät als weiterer elektronischer Einrichtung (4) eine zweite Transporteinrichtung (1) gebildet wird, wobei wahlweise die drahtlose Datenverbindung zwischen dem mobilen Kommunikationsgerät und der Transporteinrichtung (1) aufrechterhalten wird oder nicht, wenn das mobile Kommunikationsgerät wieder von der vorgesehenen Position an der Transporteinrichtung (1) entfernt wird und wobei durch das wahlweise Entfernen des mobilen Kommunikationsgeräts wieder die erste Transporteinrichtung (1) gebildet wird, und
- **dass** in einem vierten Schritt durch das Stapeln wenigstens eines Transportgeräts (1a) der ersten Transporteinrichtung (1) mit gleichartigen Transportgeräten (1a) eine mit dem Stapelverbund identische dritte Transporteinrichtung (1) gebildet wird, wobei spätestens durch das Bilden der dritten Transporteinrichtung (1) die Trennung der drahtlosen Datenverbindung zwischen dem mobilen Kommunikationsgerät und der Transporteinrichtung (1) veranlasst wird.

## Claims

1. Transport device (1) having at least one transport unit (1a), individualized by an identification means (9), that has at least one goods storage device (2) and at least one grip (3) and that is stackable with in each case like transport units (1a), wherein the transport device (1) has at least two electronic devices (4) to which power is supplied, which are arranged on the same transport unit and/or on different transport units (1a) and at least one of which performs the function of a user interface (6) and at least one of which performs the function of a detection device (5), and which each have integrated data-processing means (13) and means (15) for wireless data transmission,
**characterized**
- **in that** each electronic device (4) to which power is supplied is individualizable by at least one identification means (9) that uses a machine-detectable identifier (10),
- **in that** the electronic devices (4) to which power is supplied are arranged on the transport device (1) in such a way that the spatial position of at least one further electronic device (4) on the transport device (1) is ascertainable by the at least one detection device (5), and
- **in that** the transport device (1) is configured to use the data-processing means (13) and the means for wireless data transmission (15) to ascertain the respective identifier (10) and the respective spatial position on the transport device (1) in a mutually associable manner for at least two of the electronic devices (4) to which power is supplied.

2. Transport device according to Claim 1, **characterized in that** the transport device (1) is a stack combination consisting of transport devices (1).

3. Transport device according to Claim 1, **characterized in that** the at least one transport unit (1a) is a shopping trolley, a platform trolley, a luggage trolley, a roller container, a tray trolley, a roller basket, a shopping basket, a tray or a hand truck.

4. Transport device according to Claim 1, **characterized in that** the at least two electronic devices (4) are arranged on the grip (3) and/or on the goods storage device (2) and/or on an optionally present chassis (18) and/or on an optionally present child seat device of the at least one transport unit (1a) and occupy two different stack dead spaces (7a, 7b) in the stack combination of multiple like transport units (1a).

5. Transport device according to Claim 1, **characterized in that** at least one electronic device (4) is connected in a positively locking manner to the grip (3) or to a goods storage device (2) or to the optionally present chassis (18) of the at least one transport unit (1a) or to the optionally present child seat device in such a way that the positively locking connection imposes the provided position of the electronic device (4) on further electronic devices (4) arranged on the at least one transport unit (1a).

6. Transport device according to Claim 1, **characterized in that** at least two electronic devices (4) differ only in their housing and their identifier.

7. Transport device according to Claim 1, **characterized in that** the transport device is configured to transmit from a detection device (5) the individual identifier (10) of said detection device and/or the identifier of a further electronic device (4) to a further electronic device (4) together with image data generated by this detection device (5) or as part of the image data.

8. Transport device according to Claim 1, **characterized in that** the spatial arrangement of at least one electronic device (4) to which power is supplied is determined using an optical and/or audible, actively generated or passively available, signal that also encodes and conveys an identifier (10).

9. Transport device according to Claim 1, **characterized in that** there is provision for a first and a second spatial position on the transport device (1) for at least one electronic device (4) to which power is supplied, the electronic device (4) being connected to the same mounting point (8) on the at least one transport unit (1a) in both positions, wherein there is electrically conductive contact between the at least one electronic device (4) that adopts the first spatial position and the mounting point (8) and wherein there is no electrically conductive contact between the at least one electronic device (4) that adopts the second spatial position and the mounting point (8).

10. Transport device according to Claim 1, **characterized in that** a wireless inductive charging device (11a) is used as means (11) for wirelessly supplying power, said charging device optionally being used only to charge a local electrical energy store (12) of the respective electronic device (4) to which power is supplied, or also being used as a transmitter or being used within the same electronic device (4) to which power is supplied in order to supply power to a transmitter intended for the inductive energy transmission to at least one further electronic device (4) to which power is supplied.

11. Transport device according to Claim 1, **characterized in that** the transport device (1) is configured to use mutually associated identifiers (10) and spatial position data (20) of the at least two electronic devices (4) to which power is supplied in order to initiate, control or terminate inductive charging processes that are used to supply power to the at least two electronic devices (4).

12. Transport device according to Claim 1, **characterized in that** the transport device (1) is configured to produce data that relate to the state or to changes of state of the transport device (1) or of parts of the transport device (1), in particular presence and/or configuration and/or arrangement and/or function and/or damage or lack of damage and/or proper or improper use.

13. Transport device according to Claim 1, **characterized in that** the transport device (1) is configured to make data relating to the earlier and/or present state or to changes of state of the transport device available to a user by using the at least one user interface (6) and/or to wirelessly transmit said data to data-processing devices that are not part of the transport device (1).

14. Transport device according to Claim 1, **characterized in that** the transport device (1) is configured firstly to use at least one first detection device (5) to continuously generate spatial position data (20) relating to the position of at least one first electronic device (4), with changes of position being detected as an interference signal from an interfering influence affecting the transport device (1), secondly to use the generated position data (20) to ascertain the effect of the interfering influence on at least one second detection device (5) and thirdly to calibrate and/or continuously denoise the data generated by the at least one second detection device (5) in light of the interference signal.

15. Method for manufacturing, starting up and maintaining a transport device according to Claim 1, **characterized in that**
- a first step involves at least one electronic device (4) to which power is supplied individually detecting at least one further electronic device (4) on the basis of its identification means (9), **in that**
- a second step involves the at least one detection device (5) ascertaining the spatial position of at least one further electronic device (4) on the transport device (1) and/or at least two detection devices (5) ascertaining their positions by covering a shared spatial area (14),
the first and second steps optionally also being able to be performed in reverse order or simultaneously or as only one step, and **in that**
- a third step involves the transport device (1) using the data-processing means (13) and the means for wireless data transmission (15) to ascertain the respective identifier (10) and the respective spatial position on the transport device (1) in a mutually associable manner for at least two electronic devices (4) to which power is supplied.

16. Method according to Claim 15, **characterized in that** the formation of a stack combination consisting of transport devices (1) in turn forms a transport device (1) .

17. Method according to Claim 15, **characterized**
- **in that** a first step involves a mobile communication device individualized by an identification means (9) being arranged at a position provided therefor on a first transport device (1),
- **in that** a second step, at the prompting of the first step, involves the identifier (10) and the respective spatial position of the mobile communication device on the transport device (1) being ascertained in a mutually associable manner by the first transport device (1),
- **in that** a third step, at the prompting of the second step, involves a wireless data connection being set up between the mobile communication device and the first transport device (1), and the mobile communication device, as a further electronic device (4), being used to form a second transport device (1), wherein the wireless data connection between the mobile communication device and the transport device (1) is optionally maintained or not maintained if the mobile communication device is removed from the provided position on the transport device (1) again and wherein the optional removal of the mobile communication device forms the first transport device (1) again, and
- **in that** a fourth step involves the stacking of at least one transport unit (1a) of the first transport device (1) with transport units (1a) of the same type forming a third transport device (1) identical to the stack combination, wherein at the latest the formation of the third transport device (1) prompts the breaking of the wireless data connection between the mobile communication device and the transport device (1).

## Revendications

1. Dispositif de transport (1) comprenant au moins une unité de transport (1a) qui est individualisée par un moyen d'identification (9) et qui comporte au moins un dispositif de stockage de marchandises (2) et au moins une poignée (3) et qui peut être empilé avec les mêmes unités de transport (la), le dispositif de transport (1) comportant au moins deux dispositifs électroniques (4) alimentés en courant et disposés sur la même unité de transport et/ou sur des unités de transport différentes (la), dont au moins une a la fonction d'une interface utilisateur (6) et au moins une a la fonction d'un dispositif de détection (5) et qui disposent chacune de moyens de traitement de données (13) et de moyens (15) de transmission de données sans fil intégrés,
**caractérisé en ce que**
- chaque dispositif électronique (4) alimenté en courant peut être individualisé par au moins un moyen d'identification (9) utilisant un identifiant (10) détectable par machine,
- les dispositifs électroniques (4) alimentés en courant sont disposés sur le dispositif de transport (1) de manière à ce que la position dans l'espace d'au moins un autre dispositif électronique (4) sur le dispositif de transport (1) puisse être déterminée par l'au moins un dispositif de détection (5), et
- le dispositif de transport (1) est configuré pour déterminer l'identifiant respectif (10) et la position spatiale respective sur le dispositif de transport (1) de manière associable l'un à l'autre à l'aide des moyens de traitement de données (13) et des moyens de transmission de données sans fil (15) pour au moins deux des dispositifs électroniques (4) alimentés en courant.

2. Dispositif de transport selon la revendication 1, **caractérisé en ce que** le dispositif de transport (1) est un ensemble d'empilement comprenant des dispositifs de transport (1).

3. Dispositif de transport selon la revendication 1, **caractérisé en ce que** l'au moins une unité de transport (la) est un chariot de supermarché, un chariot à plate-forme, un chariot à bagages, un conteneur à roulettes, un chariot à plateaux, un panier à roulettes, un panier de courses, un plateau ou un diable.

4. Dispositif de transport selon la revendication 1, **caractérisé en ce que** les au moins deux dispositifs électroniques (4) sont disposés sur la poignée (3) et/ ou sur le dispositif de stockage de marchandises (2) et/ou sur un châssis optionnel (18) et/ou sur un dispositif de siège pour enfant optionnel de l'au moins une unité de transport (1a) et réclament deux espaces morts d'empilement différents (7a, 7b) dans l'ensemble d'empilement de plusieurs unités de transport (1a) identiques.

5. Dispositifs de transport selon la revendication 1, **caractérisés en ce qu'**au moins un dispositif électronique (4) est relié par complémentarité de formes à la poignée (3) ou à un dispositif de stockage de marchandises (2) ou au châssis optionnel (18) de l'au moins une unité de transport (1a) ou au dispositif de siège pour enfant optionnel de manière à ce que la liaison par complémentarité de formes force la position prévue du dispositif électronique (4) à d'autres dispositifs électroniques (4) disposés sur au moins une unité de transport (1a).

6. Dispositif de transport selon la revendication 1, **caractérisé en ce qu'**au moins deux dispositifs électroniques (4) ne diffèrent que par leur boîtier et leur identifiant.

7. Dispositif de transport selon la revendication 1, **caractérisé en ce que** le dispositif de transport est configuré pour transmettre, depuis un dispositif de détection (5), son propre identifiant (10) et/ou l'identifiant d'un autre dispositif électronique (4) conjointement avec des données d'image générées par ce dispositif de détection (5) ou en tant que partie des données d'image à un autre dispositif électronique (4).

8. Dispositif de transport selon la revendication 1, **caractérisé en ce que** la disposition spatiale d'au moins un dispositif électronique (4) alimenté en courant est spécifiée à l'aide d'un signal optique et/ ou acoustique qui est généré de manière active ou disponible de manière passive et qui code et transmet également un identifiant (10).

9. Dispositif de transport selon la revendication 1, **caractérisé en ce qu'**une première et une deuxième position spatiale sur le dispositif de transport (1) sont prévues pour au moins un dispositif électronique (4) alimenté en courant, le dispositif électronique (4) étant relié, dans les deux positions, au même point de montage (8) sur au moins un dispositif de transport (la), un contact conducteur de courant existant entre l'au moins un dispositif électronique (4), occupant la première position spatiale, et le point de montage (8) et aucun contact conducteur de courant n'existant entre l'au moins un dispositif électronique (4), occupant la deuxième position spatiale, et le point de montage (8).

10. Dispositif de transport selon la revendication 1, **caractérisé en ce qu'**un dispositif de charge par induction sans fil (11a) est utilisé comme moyen (11) d'alimentation en courant sans fil et ne sert éventuellement qu'à charger un accumulateur de courant local (12) du dispositif électronique respectif (4) alimenté en courant ou sert également de transmetteur ou, à l'intérieur du même dispositif électronique (4) alimenté en courant, sert à alimenter en courant un transmetteur qui est destiné à la transmission d'énergie par induction à au moins un autre dispositif électronique (4) alimenté en courant.

11. Dispositif de transport selon la revendication 1, **caractérisé en ce que** le dispositif de transport (1) est configuré pour utiliser des identifiants (10) et des données de position spatiale (20), associés l'un à l'autre, des au moins deux dispositifs électroniques (4) alimentés en courant afin de lancer, commander ou terminer des processus de charge par induction qui servent à l'alimentation en courant des au moins deux dispositifs électroniques (4).

12. Dispositif de transport selon la revendication 1, **caractérisé en ce que** le dispositif de transport (1) est configuré pour créer des données qui concernent l'état ou les changements d'état du dispositif de transport (1) ou des parties du dispositif de transport (1), en particulier la présence et/ou la configuration et/ou l'agencement et/ou la fonction et/ou l'endommagement ou l'absence d'endommagement et/ou l'utilisation prévue ou non.

13. Dispositif de transport selon la revendication 1, **caractérisé en ce que** le dispositif de transport (1) est configuré pour mettre à la disposition d'un utilisateur, à l'aide de l'au moins une interface utilisateur (6), l'état ou les changements d'état antérieurs et/ou actuels du dispositif de transport et/ ou pour les transmettre sans fil aux dispositifs de traitement de données n'appartenant pas au dispositif de transport (1).

14. Dispositif de transport selon la revendication 1, **caractérisé en ce que** le dispositif de transport (1) est configuré premièrement pour générer en continu, à l'aide d'au moins un premier dispositif de détection (5), la position d'au moins un premier dispositif électronique (4) concernant des données de position spatiale (20), des changements de position étant détectés comme signal d'interférence d'une interférence agissant sur le dispositif de transport (1), deuxièmement pour utiliser les données de position générées (20) pour déterminer l'effet de l'interférence sur au moins un deuxième dispositif de détection (5) et troisièmement pour calibrer et/ou débruiter en continu les données, générées par l'au moins un deuxième dispositif de détection (5), avec prise en compte du signal d'interférence.

15. Procédé de fabrication, de mise en service et de maintenance d'un dispositif de transport selon la revendication 1, **caractérisé en ce que**
- dans une première étape, au moins un dispositif électronique (4) alimenté en courant détecte individuellement, à l'aide de ses moyens de détection (9), au moins un autre dispositif électronique (4),
- dans une deuxième étape, l'au moins un dispositif de détection (5) détermine la position spatiale d'au moins un autre dispositif électronique (4) sur le dispositif de transport (1) et/ou au moins deux dispositifs de détection (5) déterminent leur position en détectant une zone spatiale commune (14),
la première et la deuxième étape pouvant optionnellement être également réalisées dans l'ordre inverse ou simultanément ou en une seule étape, et
- dans une troisième étape, le dispositif de transport (1) détermine, pour au moins deux dispositifs électronique (4) alimentés en courant, à l'aide des moyens de traitement de données (13) et des moyens de transmission de données sans fil (15), l'identifiant respectif (10) et la position spatiale respective sur le dispositif de transport (1) de manière à pouvoir être associés l'un à l'autre.

16. Procédé selon la revendication 15, **caractérisé en ce qu'**un dispositif de transport (1) est lui-même formé par la formation d'un ensemble d'empilement comprenant des dispositifs de transport (1).

17. Procédé selon la revendication 15, **caractérisé en ce que**
- dans une première étape, une unité de communication mobile individualisée par un moyen de reconnaissance (9) est disposée à une position prévue à cet effet sur un premier dispositif de transport (1),
- dans une deuxième étape, commandée par la première étape, l'identifiant (10) et la position spatiale respective de l'unité de communication mobile sur le dispositif de transport (1) sont déterminés par le premier dispositif de transport (1) de manière à pouvoir être associés l'un à l'autre,
- dans une troisième étape, commandée par la deuxième étape, une liaison de données sans fil est établie entre l'unité de communication mobile et le premier dispositif de transport (1) et un deuxième dispositif de transport (1) est formé avec l'unité de communication mobile comme autre dispositif électronique (4), la liaison de données sans fil entre l'unité de communication mobile et le dispositif de transport (1) étant optionnellement maintenue ou non lorsque l'unité de communication mobile est à nouveau retirée de la position prévue sur le dispositif de transport (1) et le premier dispositif de transport (1) étant à nouveau formé par le retrait optionnel de l'unité de communication mobile, et
- dans une quatrième étape, l'empilement d'au moins une unité de transport (1a) du premier dispositif de transport (1) avec des unités de transport (1a) similaires, permet de former un troisième dispositif de transport (1) identique à l'ensemble d'empilement, la coupure de la liaison de données sans fil entre l'unité de communication mobile et le dispositif de transport (1) étant provoquée au plus tard par la formation du troisième dispositif de transport (1).
